# EUROPEAN PATENT SPECIFICATION

(11) **EP 4 544 848 B1**
(45) Date of publication and mention of the grant of the patent: **20.05.2026**
(21) Application number: 23762603.1
(22) Date of filing: 03.08.2023
(51) Int. Cl.: H04W 68/02, H04W 52/02, H04W 76/28

(54) **WTRU REACHABILITY IN ENERGY SAVING NETWORKS**
WTRU-ERREICHBARKEIT IN ENERGIESPARENDEN NETZWERKEN
ACCESSIBILITÉ DE WTRU DANS DES RÉSEAUX À ÉCONOMIE D'ÉNERGIE

(30) Priority: 03.08.2022 US 202263394735 P; 27.09.2022 US 202263410327 P
(43) Date of publication of application: 30.04.2025
(60) Divisional application: 26167986.4
(73) Proprietor: InterDigital Patent Holdings, Inc., Wilmington, DE 19809 (US)
(72) Inventor: ALFARHAN, Faris, Montreal, Québec H3A 3G4 (CA); MARINIER, Paul, Montreal, Québec H3A 3G4 (CA); TEYEB, Oumer, Montreal, Québec H3A 3G4 (CA); KINI, Ananth, Conshohocken, Pennsylvania 19428 (US); LEE, Moon IL, New York, New York 10120 (US); STERN-BERKOWITZ, Janet, New York, New York 10120 (US)
(74) Representative: AWA Sweden AB
(86) International application number: PCT/US2023/071566
(87) International publication number: WO 2024/030989

(56) References cited:
- WO-A1-2022/155642
- MODERATOR (INTEL CORPORATION): "Discussion Summary for energy saving techniques of NW energy saving SI", vol. RAN WG1, no. e-Meeting; 20220509 - 20220520, 9 May 2022 (2022-05-09), XP052191785, Retrieved from the Internet <URL:https://ftp.3gpp.org/tsg_ran/WG1_RL1/TSGR1_109-e/Docs/R1-2205140.zip R1-2205140 Intel summary_109-e-Netw_Energy_NR-02_v000.docx> [retrieved on 20220509]
- NOKIA ET AL: "Others", vol. RAN WG1, no. e-Meeting; 20220509 - 20220520, 29 April 2022 (2022-04-29), XP052152880, Retrieved from the Internet <URL:https://ftp.3gpp.org/tsg_ran/WG1_RL1/TSGR1_109-e/Docs/R1-2203226.zip R1-2203226 Others.docm> [retrieved on 20220429]

## Description

### CROSS-REFERENCE TO RELATED APPLICATION

This application claims priority to United States Provisional Patent Application No. 63/394,735 filed on August 3, 2022, and to United States Provisional Patent Application No. 63/410,327 filed on September 27, 2022.

### BACKGROUND

Techniques for energy savings in certain networks (*e.g.,* 5G network) may be being considered. For example, one or more enhancements for enabling a network to minimize its power consumption from transmission and/or reception may be considered. Such minimization may be beneficial for reducing operational costs and/or environmental sustainability.

Compared to earlier systems, for example, one or more (e.g., certain) networks (e.g., 5G NR) may minimize one or more transmissions from the network, *e.g.,* when there is no data. For example, an always-on cell-specific reference signal (CRS) may not be used in one or more (e.g., certain) efficient networks. Further energy consumption reduction may be provided.

In one or more examples, a network may consume energy when not transmitting from one or more other activities, *e.g.,* such as baseband (e.g., digital) processing for reception and/or beamforming. Such idle power consumption may not be negligible (*e.g.,* in dense networks), even when no WTRU is served during a given period. If the network avoids such activity when not transmitting to a WTRU, for example, energy consumption may be reduced.

Additionally or alternatively, one or more (e.g., certain) networks (*e.g.,* 5G NR) may support beamforming with one or more (e.g., many) ports (*e.g.,* up to 64 transmit and receive ports), and/or energy consumption may increase as the number of ports utilized increases. The utilization of a maximum number of ports may not be necessary for certain one or more (e.g., all) WTRUs. If a network adapts the number of ports (*e.g.,* to only what is required), for example, energy consumption may be reduced.

In examples, network energy savings may aim to improve the operation of the cellular eco-system and/or enable more efficient adaptation of network transmissions and/or receptions resources in the time, frequency, spatial, and/or power domains. For example, such scenarios may receive support, feedback, and/or assistance from one or more WTRUs. In examples, echo-friendly WTRU operation (*e.g.,* that allows deployment of greener network deployments and/or reduced emissions and Opex costs of operating cellular networks) may be provided. For example, one or more (e.g., certain) networks (*e.g.,* 5G) may not require transmission of always-on synchronization and/or reference signals, and/or may support adaptable bandwidth and/or MIMO capabilities, which may enable greater efficiency in operating newer deployments.

Document WO 2022/155642 discloses a base station in a wireless network which transmits a paging early indication (PEI) to a user equipment (UE) before a paging occasion (PO) to indicate whether the UE should wake up to receive a page.

### SUMMARY

The invention is defined by the appended independent claims 1 and 11.

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 illustrates an example associated with the time/frequency structure of an SSB.
FIG 3 illustrates an example associated with beam sweeping.
FIG. 4 illustrates an example associated with switching NES DRX cycles while a WTRU is in the idle/inactive states for NES.
FIG. 5 illustrates an example associated with a sample paging procedure in NES state, including paging reception from a second cell.
FIG. 6 illustrates a second example associated with a sample paging procedure in NES state.

### DETAILED DESCRIPTION

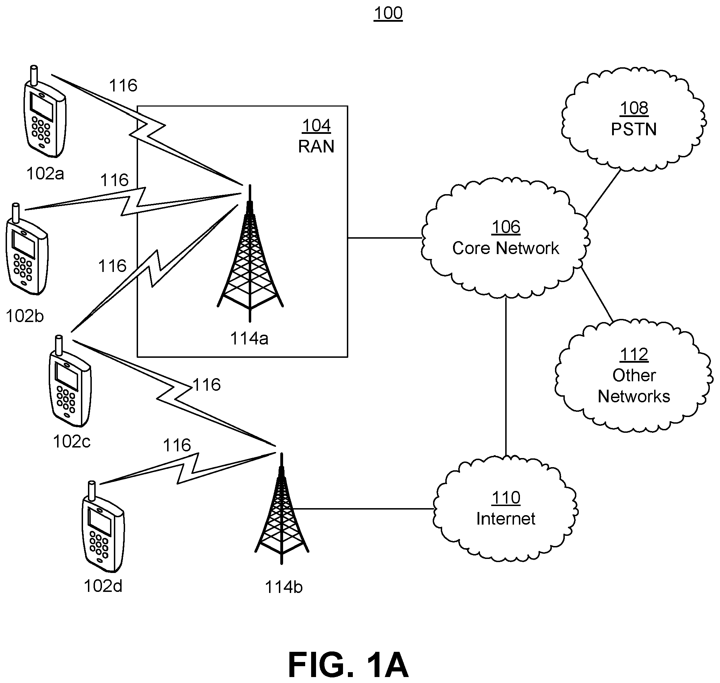

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (WTRU), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a WTRU.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, *etc.* The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements. mobility requirements, and the like. The CN 106/115 may provide call control, billing services, mobile location-based services, prepaid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

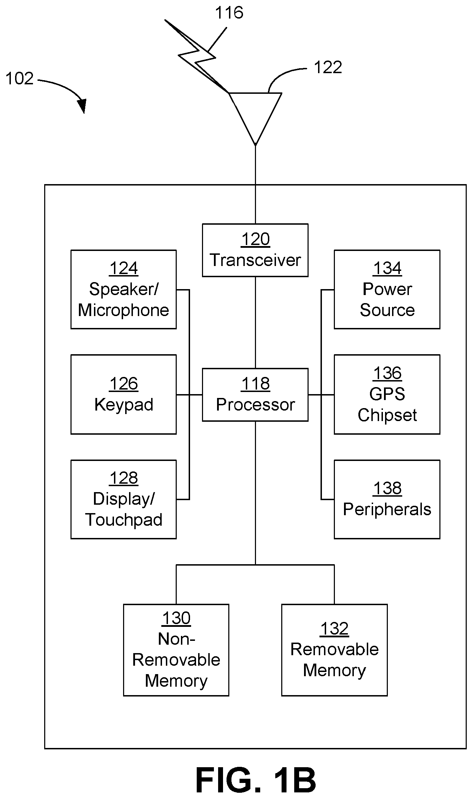

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any subcombination of the foregoing elements while remaining consistent with an embodiment.

The processor 118 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic lightemitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Liion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit 139 to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

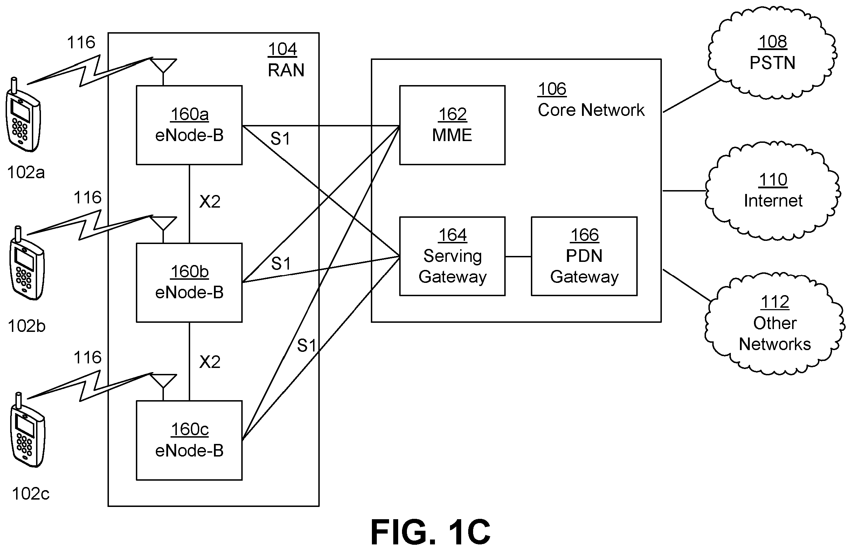

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

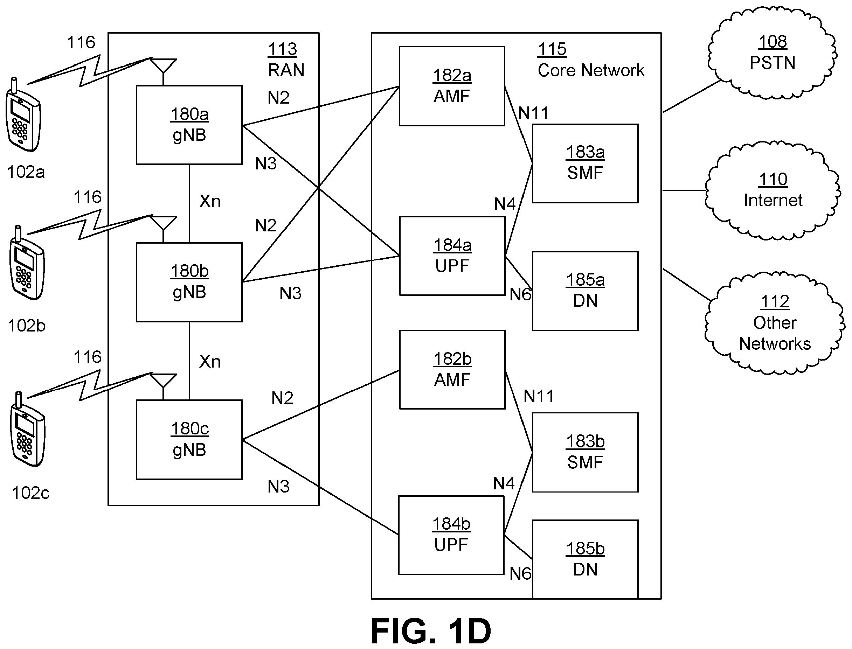

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating WTRU IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-ab, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-theair wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

Systems, methods, and/or apparatuses provided herein may be with respect to WTRU grouping. For example, one or more methods for adaptation of discontinuous reception (DRX) to match NES state, including group based DRX may be provided herein.

Systems, methods, and/or apparatuses provided herein may be with respect to paging. Adaptation of paging occasions and/or frames to match network energy savings (NES) state may be described herein. Monitoring of paging on an alternative serving cell may be provided herein. For example, a WTRU may monitor for paging on one or more alternative cells if the best serving cell and/or camped cell (e.g., based on measured channel condition(s)) is in a specific availability state (e.g., deep sleep, dormant, and/or off) and/or if it does not detect a presence signal (e.g., discovery signal transmitted from a cell in NES, synchronization signal block (SSB), reference signal, and/or physical downlink control channel (PDCCH)) associated with the best cell, possibly on a different synchronization signal (SS). NES-based subgroup indication in the paging early indication (PEI) may be provided herein. For example, a WTRU may monitor for a PEI with a cell specific subgroup if the best serving cell is sleeping. PEI may be received from the same best cell and/or a different cell. Delayed paging based on detection of a cell signal block and/or lack of detection of a signal may be provided herein.

As described herein, channel state information (CSI) may include one or more of the following: channel quality index (CQI), rank indicator (RI), precoding matrix index (PMI), an L1 channel measurement (e.g., reference signal received power (RSRP) such as L1-RSRP, or signal to interference and noise ratio (SINR)), CSI-reference signal (CSI-RS) resource indicator (CRI), SS/ physical broadcast channel (PBCH) block resource indicator (SSBRI), layer indicator (LI) and/or any other measurement quantity measured by the WTRU from the configured CSI-RS or SS/PBCH block.

As described herein, uplink control information (UCI) may include one or more of the following: CSI, hybrid automatic repeat request (HARQ) feedback for one or more HARQ processes, Scheduling request (SR), Link recovery request (LRR), configured grant or cell group (CG)-UCI and/or one or more other control information bits that may be transmitted on the physical uplink control channel (PUCCH) and/or physical uplink shared channel (PUSCH).

As described herein, channel conditions may refer to one or more (e.g., any) conditions relating to the state of the radio/channel, which may be determined by the WTRU based on one or more of the following: a WTRU measurement (e.g., L1/SINR/RSRP, CQI/modulation and coding scheme (MCS), channel occupancy, received signal strength indicator (RSSI), power headroom, exposure headroom), L3/mobility-based measurements (e.g., RSRP, reference signal received quality (RSRQ)), a radio link monitoring (RLM) state, and/or channel availability in unlicensed spectrum (e.g., whether the channel is occupied based on determination of a listen-before-talk (LBT) procedure and/or whether the channel is deemed to have experienced a consistent LBT failure).

As described herein, a physical random access channel (PRACH) resource may refer to a PRACH resource (e.g., in frequency), a PRACH occasion (RO) (e.g., in time), a preamble format (e.g., in terms of total preamble duration, sequence length, guard time duration and/or in terms of length of cyclic prefix) and/or a certain preamble sequence used for the transmission of a preamble in a random access procedure.

Scheduling information (e.g., an uplink grant and/or a downlink assignment) may include one or more of the following: a frequency allocation; a time allocation (e.g., aspect of time allocation, such as a duration); a priority; a modulation and coding scheme; a transport block (TB) size; one or more (e.g., a number of) spatial layers; one or more (e.g., a number of) transport blocks to be carried; a transmission configuration indicator (TCI) state and/or SRS resource indicator (SRI) (e.g., SRI may indicate the uplink PUSCH spatial relation information); one or more (e.g., a number of) repetitions; and/or whether a grant is a configured grant type 1, type 2, or a dynamic grant.

Downlink control information (DCI) and/or one or more (e.g., any) other (e.g., suitable) indication may include one or more of the following: an indication of a value (e.g., an explicit indication by a DCI field and/or by radio network temporary identifier (RNTI)) used to mask the cyclical redundancy check (CRC) of the PDCCH; an implicit indication, for example, by a property such as DCI format, DCI size, Coreset or search space, aggregation level, identity of first control channel resource (e.g., index of first control channel element (CCE)) for a DCI, where the mapping between the property and the value may be signaled by radio resource control (RRC) and/or medium access control (MAC); and/or an explicit indication (*e.g.,* by a downlink (DL) MAC control element (CE)).

The terms network availability state and NES state may be used interchangeably herein.

The terms selected cell, best cell, first cell, best measured cell, serving cell, and/or camped cell may be used interchangeably herein.

In one or more (e.g., certain) networks *(*e*.g.,* NR), system information (SI) may include a master information block (MIB) and/or one or more (e.g., a number of) system information blocks (SIBs). For example, SIBs may be divided into minimum SI and other SI. Minimum SI may include information used for initial access and/or for acquiring one or more (e.g., any other) SI. Minimum SI may include the MIB and/or SIB1. For a WTRU to camp on a cell, the WTRU may (*e.g.,* must) have acquired the contents of the minimum SI of that cell.

One or more other SI may include the SIBs (*e.g.,* all of the SIBs) that are not broadcasted in the minimum SI. A WTRU may not receive (*e.g.,* may not need to receive) the SIBs, for example, before accessing the cell. Additionally or alternatively, other SI may be referred to as on-demand SI (*e.g.,* because the gNB may transmit and/or broadcast these SIBs only when explicitly requested by one or more WTRU(s), for example, to conserve network energy).

The MIB may include cell barred status information and/or (e.g., essential) physical layer information of the cell, which may be used to receive further system information, e.g., CORESET#0 configuration. The MIB may be periodically broadcast on the broadcast channel (BCH) (*e.g.,* the MIB may be transmitted at a periodicity of 80ms, where repetitive transmission may occur and/or within the 80ms).

SIB1 may include the scheduling of one or more other system information blocks and/or may include certain information used for initial access. Additionally or alternatively, SIB1 may be referred to as remaining minimum SI (RMSI), and/or may be periodically broadcast on the DL-shared channel (SCH) and/or sent in a dedicated manner on the DL-SCH to one or more WTRUs in RRC_CONNECTED state.

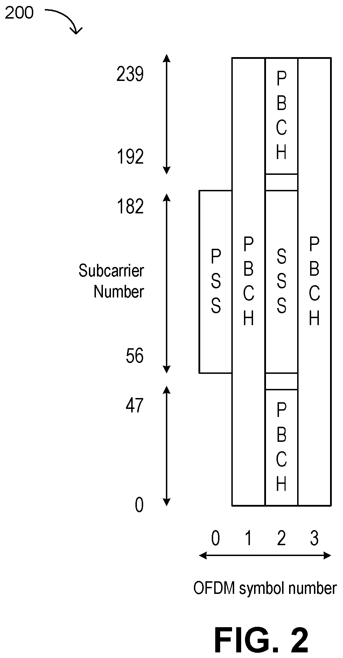

FIG. 2 illustrates an example associated with the time/frequency structure of an SSB. The Synchronization Signal and PBCH block (SSB) may include primary and/or secondary synchronization signals (PSS, SSS). For example, one or more (e.g., each) of the PSS and/or the SSS may occupy 1 symbol and 127 subcarriers. The PBCH may span across 3 orthogonal frequency-division multiplexing (OFDM) symbols and 240 subcarriers, but, as shown in FIG. 2, a symbol on either side of the SSS may not be used. The possible time locations of SSBs within a half-frame may be determined by sub-carrier spacing. The periodicity of the half-frames where SSBs are transmitted may be configured by the network. During a half-frame, different SSBs may be transmitted in one or more different spatial directions (e.g., using different beams, spanning the coverage area of a cell).

Within the frequency span of a carrier, one or more (*e.g.,* multiple) SSBs may be transmitted. The physical cell IDs (PCIs) of the SSBs transmitted in different frequency locations may not be unique (*e.g.,* different SSBs in the frequency domain may have different PCIs). When an SSB is associated with an RMSI, the SSB may be referred to as a Cell-Defining SSB (CD-SSB). A primary cell (PCell) may be associated with a CD-SSB located on the synchronization raster.

A WTRU may determine (e.g., assume) a band-specific sub-carrier spacing for an SSB, *e.g.*, unless a network has configured the WTRU to determine (e.g., assume) a different sub-carrier spacing. One or more (*e.g.,* several) beams may be associated with a given cell, and/or one or more (*e.g.*, multiple) SSBs may be transmitted within a given cell on the one or more different beams (*e.g.,* beam sweeping).

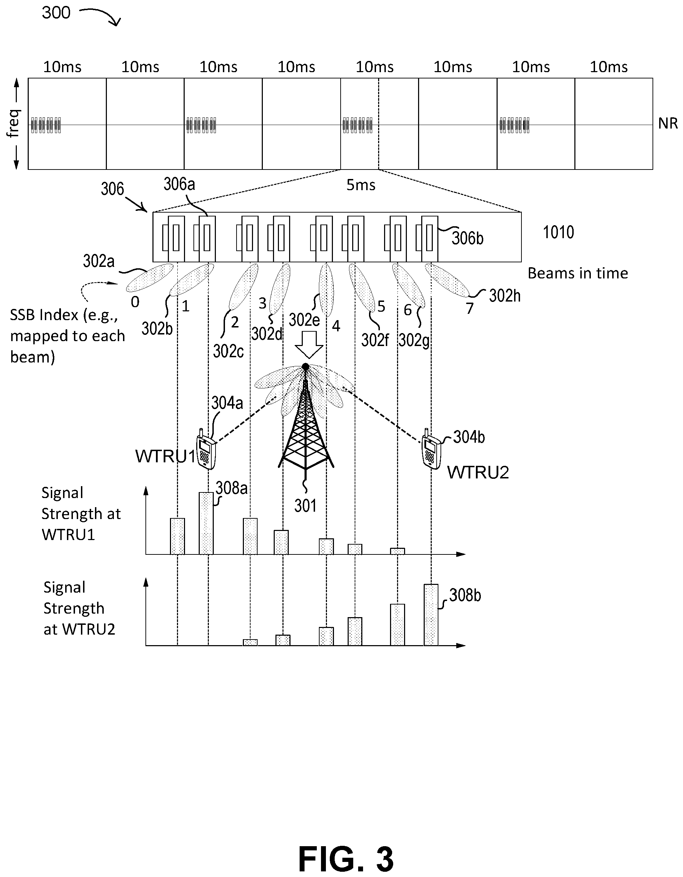

FIG 3 illustrates an example associated with beam sweeping. As shown in FIG. 3, one or more (e.g., multiple) SSBs (e.g., 302a, 302b, 302c, 302d, 302e, 302f, 302g, 302h) may be transmitted at a certain interval. For example, each SSB may be identified by a unique number (e.g., referred to as SSB index, SSB index mapped to each beam). For example, SSB 302a may have unique identifier 0 (SSB0); SSB 302b may have unique identifier 1 (SSB1); SSB 302c may have unique identifier 2 (SSB2), SSB 302d may have unique identifier 3 (SSB3); SSB 302e may have unique identifier 4 (SSB4); SSB 302f may have unique identifier 5 (SSB5); SSB 302g may have unique identifier 6 (SSB6); and/or SSB 302h may have unique identifier 7 (SSB7). Each SSB may be transmitted via a specific beam radiated in a certain direction. Each transmitted beam may be in space (e.g., may be how the WTRU perceives the one or more beams). For example, SSB 302a may be transmitted via a specific beam radiated in a different direction than that of SSB 302b, SSB 302c, and/or SSB 302d.

One or more (e.g., multiple) WTRUs (e.g., WTRU1 304a, WTRU2 304b) may be located at one or more (e.g., various) places around a gNB 301. A WTRU may measure the signal strength of each detected SSB over a certain period (e.g., a period of one SSB set). For example, WTRU1 304a may measure the signal strength of SSB0 302a, SSB1 302b, SSB2 302c, SSB3 302d, SSB4 302e, SSB5 302f, SSB6 302g, and/or SSB7 302h. For example, WTRU2 304b may measure the signal strength of SSB0 302a, SSB1 302b, SSB2 302c, SSB3 302d, SSB4 302e, SSB5 302f, SSB6 302g, and/or SSB7 302h. From the measurement result(s) (e.g., 308a, 308b), the WTRU (e.g., WTRU1 304a and/or WTRU2 304b) may identify the SSB index with the strongest signal strength (e.g., 308a, 308b). Referring to the example shown in FIG. 3, for example, the WTRU1 304a may identify beam #1 306a as the strongest signal strength 308a, and/or the WTRU2 304b may identify beam#7 306b as the SSB index with the strongest signal strength 308b.

The number of different beams being transmitted may be determined and/or based on how many SSBs are being transmitted within a SSB burst set (e.g., a set of SSBs being transmitted in 5 ms window of SSB transmission, 306). In frequency range one (FR1), the maximum number of SSBs within an SSB set may be 4 or 8, while for frequency range two (FR2), the maximum number of SSBs within an SSB set may be 64.

A WTRU may determine whether it can transmit and/or receive on one or more (e.g., certain) resources based (e.g., depending) on a network availability state, which may imply the gNB's power savings status. An availability state may correspond to a network energy savings state and/or a gNB activity level. An availability state may be uplink (UL) or downlink (DL) specific, and/or may change from symbol to symbol, slot to slot, frame to frame, and/or on longer duration granularity. The WTRU may determine the availability state and/or the network may indicate the availability state. An availability state may include, for example: on; DL and UL active; UL active (e.g., UL only active); off; reduced transmission (Tx) power; dormant; micro sleep; light sleep; and/or deep sleep. Such states may be abstracted by one or more network configuration parameters and/or values. As described herein, a WTRU may determine the network's availability state based on an indication (e.g., a dynamic indication). For example, an indication (e.g., a dynamic indication) that indicates the active availability state may be sent to the WTRU (e.g. by DCI or MAC CE signaling). For example, the off availability state may imply that the gNB's baseband hardware is turned off. The sleep availability state may imply that the gNB wakes up periodically to transmit one or more (e.g., certain) signals (*e.g.,* presence signals, synchronization, and/or reference signals) and/or receive one or more (e.g., certain) UL signals. In one or more (e.g., some) availability states, one or more (e.g., certain) DL and/or UL resources may not be available during one or more (e.g., certain) periods of time, which may enable the network to turn off baseband processing and/or one or more other activities. One or more (e.g., some) measurement resources (e.g., SSBs and/or CSI-RS) may be made available (*e.g.*, may only be made available) in one or more (e.g., certain) availability states. Additionally or alternatively, one or more (e.g., certain) measurements (e.g., RLM, beam failure detection (BFD), radio resource management (RRM) measurements, CSI-RS feedback configuration, CSI feedback, *etc*.) may be made and/or reported (*e.g.,* may only be made) in certain availability states.

In one or more (e.g., certain) scenarios, a WTRU may (e.g., further) transmit a request to the network (*e.g.,* a wake-up request) to modify the network's availability state. For example, the WTRU may request to modify the network's availability state to a state for which resource(s) that satisfy(ies) the WTRU requirement(s) are available. Such a wake-up request may include a transmission that may be decodable by a lowcomplexity receiver at the gNB, for which energy consumption may be minimal. As described herein, wake up request, turn on request, and/or switch on WTRU assistance information may be used interchangeably. In one or more (e.g., certain) availability states (e.g., micro sleep and/or deep sleep), a wake-up request may be used (*e.g.,* exclusively used) and/or may refer to a physical uplink signal transmitted by the WTRU to request a change of the network's availability state. One or more (e.g., various) physical layer designs of the wake-up request signal may be used. A switch on request may otherwise be a physical layer (e.g., and/or an layer 2 (L2)) indication from the WTRU to the network, which may be delivered via a MAC CE, UCI, RRC signaling, and/or RRC reconfiguration signaling (e.g. applicable for NES), PUCCH, and/or random access channel (RACH) indication. For example, a switch on request may include switch on WTRU assistance information and/or a positioning report.

The WTRU may determine an availability state, for example, based on a received availability state indication. For example, the availability state indication may be received via layer one (L1)/L2 signaling (e.g., a group common DCI and/or indication), and/or may be determined (e.g., implicitly determined based on the reception of periodic DL signaling, or a lack thereof). The WTRU may determine that the first cell is no longer in the NES state, for example, when the page is received via the first cell.

The WTRU may determine if a resource is available for transmission/reception and/or measurements for the determined network availability state, e.g., if it is applicable in the active availability state. Additionally or alternatively, the WTRU may adapt the WTRU's active connected mode DRX (C-DRX) cycle. Additionally or alternatively, the WTRU may adapt the WTRU's active spatial elements (e.g. antenna or logical ports). Additionally or alternatively, the WTRU may adapt the WTRU's active transmission/reception points (TRPs). Additionally or alternatively, the WTRU may adapt the WTRU's paging occasions as a function of the signaled and/or determined NES state. The WTRU may be configured with one or more sets of NES transmission and/or reception parameters (e.g., per NES state). For example, the WTRU may be configured with one or more sets of NES transmission and/or reception parameter via signaling (e.g., broadcast and/or dedicated configuration signaling). The WTRU may apply the NES parameter set according to the determined and/or signaled NES state. The WTRU may apply one or more applicable configurations based (e.g., depending) on the determined NES state. For example, the set of NES parameters may include: one or more (e.g., a number of) antenna ports; a C-DRX configuration; a measurement configuration (e.g. for RRM, RLM, and/or BFD); a CSI-RS configuration; an SSB configuration; conditional handover (CHO) or mobility candidates; and/or a set of active TRPs.

An availability state may be applicable to one or more transmissions, receptions, and/or measurement resources. An availability state may be applicable to one or more time periods, e.g., such as a time slot and/or time symbol. An availability state may be applicable to a serving cell, a cell group, a frequency band, a bandwidth part, a TRP, a set of spatial elements, and/or a range of frequencies within a bandwidth part. For examples, if the NES changes in a cell, the WTRU may receive an availability state change indication indicating that the state change is (e.g., just for) that cell. In examples, if the NES changes in a cell, the WTRU may receive an availability state change indication indicating that the state change is for certain cells (e.g., all cells at the same frequency). In examples, if the NES changes in a cell, the WTRU may receive an availability state change indication indicating that the state change is for all cells at the same RAT.

The WTRU may consider the active availability state associated with a cell, carrier, TRP, and/or frequency band to be Off, Deep sleep, and/or Micro sleep, for example, based on (e.g., after) reception of a DL signaling that changes the availability state of the TRP(s) and/or cell(s). For example, the WTRU may receive a turn off command via broadcast signaling, RRC signaling, DCI (e.g., a group common DCI), and/or a DL MAC CE (e.g. indication part of PDSCH). The WTRU may determine an availability state based on (e.g., reception of an) availability state indication, which may, for example, be received via L1/L2 signaling (e.g., a group common DCI and/or indication). For example, the WTRU may determine a change of NES state change based on the reception of a group common command L1 signaling (e.g. a group common DCI, a multi-stage DCI, a specific DCI format, and/or a DCI scrambled by a configured and/or specified NES-specific RNTI). The L1 signaling may indicate one of the configured NES parameters sets to apply. Based on the L1 signaling, the WTRU may determine a delta configuration from the current set of parameters upon determining an NES state change. The WTRU may transmit feedback and/or acknowledgment to the gNB, for example, following the reception of NES state change indication. For example, the feedback and/or acknowledgment may be multiplexed with UL data (e.g. part of an UL TB as a MAC CE and/or a sub-header indication) based on (e.g., following) the reception of NES state change indication.

In examples, the WTRU may determine a change of the NES state change based on the reception of broadcast signaling associated with NES state indication and/or change. For example, the change of NES state change may be received via signaling in one or more SIB(s) and/or part of a broadcast and/or multicast PDSCH. Additionally or alternatively, the NES may be indicated (e.g., explicitly indicated) to the WTRU in a SIB. The WTRU may be configured with one or more SIBs that are associated with (e.g., exclusively associated with) the configuration of NES parameters. For example, the WTRU may be configured to (e.g., periodically) receive such broadcast and/or multi-cast indication (e.g., the SIBs that are associated with the configuration of NES parameters). The WTRU may receive broadcast signaling and/or one or more SSB transmissions to determine the first (e.g., serving, best, camped) cell and/or the second (e.g., non-serving) cell based on the received broadcast signaling and/or based on one or more properties associated with one or more SSB transmissions. The WTRU may determine that a misdetection (e.g., of a periodic SIB, of an indication) has occurred, for example, if the SIB and/or indication is not received on an expected periodic occasion (e.g., if the WTRU is configured to periodically receive the SIBs associated with the configuration of NES parameters). Additionally or alternatively, the WTRU may determine that a mis-detection (e.g., of a periodic SIB, of an indication) has occurred if one or more (e.g. a number) of misdetections is counted. Additionally or alternatively, the WTRU may determine that a mis-detection (e.g., of a periodic SIB, of an indication) has occurred if a timer has elapsed since the last reception of the NES state indication. The WTRU may start one or more of the following based on (e.g., following) the determination of misdetection of the NES state indication. The WTRU may start inter-cell measurements based on (e.g., following) the determination of a mis-detection of an NES state indication. The WTRU may start interfrequency measurements based on (e.g., following) the determination of a mis-detection of the NES state indication. The WTRU may start inter-RAT measurements based on (e.g., following) the determination of a misdetection of the NES state indication. The WTRU may start a mobility procedure following the determination of a misdetection of the NES state indication. The WTRU may start evaluating configured CHO candidates following the determination of a misdetection of the NES state indication.

The WTRU may determine (e.g., implicitly determine) a certain availability state associated with a cell, carrier, TRP, and/or frequency band (e.g., Off, deep sleep, micro sleep, and/or dormant) from one or more of the following.

The WTRU may determine an availability state based on the reception of a command and/or signal indicating a change in the availability state. The command and/or signal may include group common DCI in connected mode, and/or RRC signaling, and/or a presence signal. The WTRU may determine (e.g., implicitly determine) an availability state, for example, based on the reception of periodic DL signaling. The WTRU may be configured and/or specified to associate an availability state with one or more DL signal types (e.g., SSB, partial SSB, and/or one or more periodicities).

The WTRU may determine an availability state based on the reception of a paging message, paging DCI, paging PDSCH, a paging related signal (e.g., paging early indication (PEI)), and/or a subset of paging occasions (POs) (e.g., the POs aligned with the NES DRX cycle and/or a configured subset of PDCCH resources). The WTRU may determine (e.g., assume) that a given NES is active based on the reception of an indication part of the DCI and/or PDCHH scheduling paging (e.g., as a function of the P-RNTI, NES-RNTI). Additionally or alternatively, the WTRU may determine (e.g., assume) that a given NES is active based on receiving an (e.g., explicit) indication (e.g. on a reserved bit). One or more of the following may apply. The WTRU may determine an availability state based on the reception of a paging message, e.g., with a certain P-RNTI, a separately configured NES P-RNTI, and/or a NES group RNTI. The WTRU may determine the availability state based on (e.g., after) the reception of a paging message with a certain P-RNTI. The WTRU may be configured with one more PEI subgroups for NES, where a subgroup may be associated with one or more availability state(s). For example, a first PEI subgroup may be associated with the second cell (e.g., non-serving cell). For example, a second PEI subgroup may be associated with the first cell (e.g., camped cell). The WTRU may determine an availability state based on the reception of a PEI with an NES subgroup (e.g., if the NES subgroup is configured and/or associated with a certain availability state). The indication of the availability state and/or the availability state switch may be indicated in the paging payload, e.g., as a flag part of the paging message and/or the short message. Such a paging indication may (e.g., further) indicate one or more other cells to monitor paging on while the cell from which the signaling was received is off, sleep, and/or in NES state. Such a paging indication may (e.g., further) indicate and/or signal one or more applicable reconfiguration parameters (e.g., for initial access, applicable PRACH resources, applicable SSB/RS occasions, applicable SI cycle, and/or the applicable cell(s) and/or associated availability states).

The WTRU may determine an availability state based on a gNB's DTX status (e.g., whether the gNB is in active time and/or an associated activity timer is running).

The WTRU may determine an availability state based on the detection of (e.g., or lack thereof) a presence indication. One or more of the following may apply. For example, a WTRU may determine an availability state associated with the cell (e.g., off and/or deep sleep) if a presence indication was not detected on one or more presence indication occasions. The WTRU may determine an availability state based on the detection of (e.g., or lack thereof) a presence indication. For example, the WTRU may determine (e.g., assume and/or change) the cell's availability state based on (e.g., after) one or more (e.g., a number of) consecutive misdetections and/or based on (e.g., after) a timer expires following the failure to detect a presence signal. The WTRU may determine that the availability state is active or de-active after expiration of a timer associated with the availability state. In examples, the timer may be configured and/or maintained in one or more (e.g., certain) states and/or modes (e.g., connected mode only). In examples, the timer may be configured and/or maintained in certain other states (e.g. idle state, inactive state). For example, the WTRU may determine an availability state based on the detection of (*e.g.,* or lack thereof) a presence indication. the WTRU may determine (e.g., implicitly) an availability state based on failing to detect periodic DL signaling (e.g., lack of reception of periodic DL signaling). For example, the WTRU may be configured with a signal quality threshold (e.g., an RSRP threshold). The WTRU may determine (e.g., assume) that the availability state is not active and/or may determine (e.g., assume) a different availability state is active, for example, if the WTRU does not detect a signal associated with an availability state (e.g., a presence signal and/or an SSB) with a signal strength above the threshold. Additionally or alternatively, the WTRU may determine (e.g., assume) that the availability state is not active based on failing to detect an identifying sequence of the presence signal (e.g., detection of the PSS sequence).

The WTRU may determine an availability state based on the time in the day. One or more of the following may apply. The WTRU may be configured to determine (e.g., automatically determine, automatically assume) a certain availability state (e.g., off, sleep, or dormant) for a configured subset of cells (e.g., capacity boosting cells) based on (e.g., depending on) the time in the day. For example, the WTRU may determine that a capacity boosting cell has an availability state as On for a first set of hours of the day, Deep sleep for a second set of hours of the day, and/or Off for a third set of hours of the day.

The WTRU may determine an availability state based on the availability state of an associated cell (e.g., another carrier of the same MAC entity, another carrier in the same cell group, another carrier in the same gNB, another sector in the same gNB, and/or a configured associated cell and/or capacity boosting cell).

The WTRU may determine an availability state based on the detection of a PSS signal (e.g., a PSS only signal) and/or an SSB signal (e.g., a simplified/stripped down SSB signal).

The WTRU may determine an availability state based on the detection of (e.g., or lack thereof) an RS signal (e.g., CSI-RS, positioning reference signal (PRS), TRS).

The WTRU may determine an availability state based on WTRU's RRC state (e.g., idle, inactive, and/or connected).

The WTRU may determine an availability state based on whether a paging message has been received (e.g., received within a configured time window).

The WTRU may determine an availability state based on whether system information (e.g., periodic SI and/or a subset of SIBs) has been received (e.g., within a configured time window).

The WTRU may determine an availability state based on one or more measured channel condition(s) being below or above a threshold. For example, the WTRU may determine (e.g., assume) a change of NES state based on a change of one or more measured channel conditions. For example, the WTRU may determine (e.g., assume) a change of NES state based making a channel measurement below (e.g., or above) a threshold. For example, the WTRU may use degradation in one or more measurements of SSBs and/or CSI-RS (e.g., in combination with other signaling) to determine the NES state. For example, the WTRU may use a configured window following the DCI reception to measure one or more SSBs and/or CSI-RS for degradation. The WTRU may determine that the NES state has changed and/or determine (e.g., assume) one or more associated actions for such NES state (e.g. trigger for CHO candidate selection and/or for group scheduling for a mobility command), for example, if a delta of SSB-RSRP drop is measured.

The WTRU may be configured to monitor for an indication that may characterize the level of network activity (e.g., an availability state). The network activity may be associated with a gNB and/or a cell. The WTRU may assume the same availability state for one or more cells (e.g., all cells) part of the same gNB, e.g., cells of the same MAC entity. The network activity indication (e.g., the presence indication) may include a channel (e.g., a PDCCH) and/or a signal (e.g., a sequence). The activity indication (e.g. the NES state change indication/command) may indicate the level of activity the WTRU may expect from the associated gNB and/or cell (e.g., reduced activity, increased activity, neutral activity). Additionally or alternatively, the activity indication may include activity information of other gNBs/cells. The activity indication may be received via a PDCCH transmission that includes group common signaling. For example, the network may transmit a group common DCI to a group of WTRUs (e.g., WTRUs in the serving cell) that indicates a change of an activity state and/or activity level (e.g., in the UL and/or the DL). The CRC of the PDCCH may be scrambled with an RNTI (e.g., a dedicated activity indication RNTI, an NES-RNTI). A WTRU may be configured with one or more search space associated with the monitoring occasions of the activity indication PDCCH. The indication may include a go-to-sleep signal, e.g., a predefined sequence. When, for example, the WTRU detects the go-to-sleep signal, the WTRU may expect a reduced activity level (e.g., over a specific time duration). For example, the WTRU may activate C-DRX for the period of time indicated. Additionally or alternatively, one or more (e.g., two) sequences may be used to indicate (e.g., regular) activity and/or reduced activity.

The signaling within the PDCCH and/or the activity indication may include one or more of the following. The signaling within the PDCCH and/or the activity indication may include an expected activity level of the associated gNBs/cells over a specific time interval (e.g., an availability state). The one or more activity levels may be predetermined and/or configured. For example, the activity levels may include: regular activity, reduced activity, neutral activity, etc. The signaling may indicate the activity level. For example, when a bit of the signal is set to 1, regular activity may be indicated. In examples, when a bit of the signal is set to 0, reduced activity may be indicated.

The signaling within the PDCCH and/or the activity indication may include transmission and/or reception attributes for one or more (e.g., each) activity levels (e.g., availability state). For example, during reduced activity, the WTRU may not be expected to monitor one or more (e.g., certain) PDCCH search spaces (e.g., including all SSs), receive a certain type of PDSCH (e.g., including all PDSCH), transmit a PUCCH/PUSCH, and/or perform one or more (e.g., certain) measurements. The WTRU may start (e.g., and/or stop) monitoring PDCCH resources and/or TCI states associated with a determined NES state. For example, the WTRU may start (e.g., or stop) monitoring PDCCH resources and/or TCI states associated with (de)activated TRPs and/or one or more spatial elements.

The signaling within the PDCCH and/or the activity indication may include a set of configurations. For example, the set of configurations may be associated with an activity level and/or may be used/applied when that activity level is indicated (e.g. an NES parameter set). For example, the set of configurations may include: SS configurations, CSI reporting configurations, indices of transmitted SSBs, *etc.* One or more (e.g., each) set(s) of configurations may include an attribute associated with an activity level. For example, one or more sets of configurations may include tag that can be set to reduced activity.

The signaling within the PDCCH and/or the activity indication may include the time interval over which an activity level is determined (e.g., valid, assumed). One or more of the following may apply. The time interval may be signaled in the PDCCH and/or included in the activity indication. For example, the time interval may be indicated using a bitmap where one or more bit(s) in the bitmap may be associated with a specific duration, e.g., a slot and/or a frame. For example, bit 1 of the bitmap may indicate regular activity and bit 0 of the bitmap may indicate reduced activity on an associated frame. For example, the time interval may be indicated with a start time and/or length of interval. The start time may be defined. For example, the start time may be determined by adding a fixed offset to the time that the time indication is received. The length of the interval may be configured and/or signaled via the indication PDCCH.

The signaling within the PDCCH and/or the activity indication may include the time interval over which an activity level is valid (e.g., assumed) may be determined (e.g., predetermined). The WTRU may determine (e.g., assume) an interruption delay (e.g. a time until an NES change is to occur) based on (e.g., after) the reception of an NES state change command reception (e.g. after the last symbol and/or slot on which the command was received). The interruption time may be in absolute time. The interruption time may be one or more (e.g. a number) of symbols. The interruption time may be one or more (e.g. a number) of slots.

The WTRU may perform cell re-selection (e.g., to another cell, frequency layer, and/or RAT) based on determining an NES change (e.g., an NES change on the camped cell, a serving cell, and/or on a candidate cell to reselect to). The WTRU may be configured and/or predefined with an alternate serving cell to perform initial access, mobility, and/or cell reselection on. For example, the WTRU may be configured and/or predefined with an alternate serving cell if the current serving cell and/or a capacity boosting cell is turned off. Additionally or alternatively, the WTRU may be configured and/or predefined with an alternate serving cell if one or more (e.g., certain) conditions are met. The WTRU may be configured with the alternate serving cell per broadcast and/or the WTRU may be configured with the alternate serving cell via dedicated signaling. For example, the WTRU may be configured with a list of one or more fallback and/or alternate serving cells (e.g., per serving cell and/or per gNB). For example, the WTRU may initiate a cell reselection and/or mobility procedure with an alternate serving cell associated with a cell and/or gNB from which a turn-off indication was received. In examples, the turn off and/or go-to-sleep indication may indicate (e.g., dynamically indicate), to the WTRU, which cell to fallback and/or connect to, e.g., by dedicated and/or broadcast signaling. The fallback/alternate cell may be configured and/or predefined to be a cell within the same gNB from which a sector has entered NES state (e.g., off, sleep, and/or reduced power). In examples, the fallback cell may be predefined (e.g., as the master node cell if the WTRU is in dual connectivity). The fallback/alternate cell may be configured and/or predefined to be a cell associated with a different RAT and/or frequency band. For example, the WTRU may fallback to an LTE and/or an FR1 cell associated with the cell and/or gNB from which the turn off indication was received (e.g., if the WTRU is in carrier aggregation (CA) and/or DC using one or more (e.g., multiple) RATs and/or multiple frequency bands).

The WTRU may determine that an uplink and/or downlink resource and/or signal is available for transmission and/or reception. The WTRU may perform one or more measurements for a determined network availability state, e.g., if it is applicable in the active availability state. The WTRU may determine that a subset of measurement resources and/or signals (e.g., SSBs, CSI-RS, TRS, PRS) are not applicable in one or more (e.g., certain) availability states. The WTRU may determine that a subset of uplink and/or downlink resources (e.g., PRACH, PUSCH, PUCCH) are not applicable in one or more (e.g., certain) availability states. The WTRU may transmit one or more (e.g., some) uplink signals in (e.g., only in) a subset of network (NW) availability states (e.g., sounding reference signal (SRS), pSRS, PRACH, UCI).

A WTRU may monitor for (e.g., monitor for reception of) a presence indication and/or signal associated with a gNB configured with one or more availability states (e.g., on, off, dormant, and/or deep sleep). One or more of the following may apply. The presence indication may be a signal (e.g., physical downlink signal). For example, the presence indication may be (e.g., a physical downlink signal) transmitted by the associated cell and/or gNB that is sleeping e.g., possibly in certain availability states (e.g., deep sleep, micro sleep, dormant, and/or off). Additionally or alternatively, the presence indication may be downlink information bits that are delivered to the WTRU, e.g., by broadcast signaling (e.g., SIB), and/or by dedicated signaling (e.g., RRC signaling and/or MAC CE).

The WTRU may change to the availability state associated with the detected presence signal (e.g., WTRU may assume On), for example, based on (e.g., after) the WTRU successfully receiving a response (e.g., from the requested cell). The response may include the transmitted WTRU assistance information and/or switch-on request transmitted by the WTRU. For example, the response may be received via a DL signal and/or channel (e.g., SSB(s), CSI-RS, PRS, PDCCH, DCI, PDSCH, and/or HARQ-ACK) and/or an L2 message (e.g., an RRC message, DL MAC CE, Msg2, MsgB, and/or Msg4). The WTRU may monitor (e.g., start to monitor) one or more additional TRPs, SSBs and/or CSI-RS resources, e.g., after the transmission of the wake-up WTRU assistance information and/or the switch-on request and/or based on (e.g., after) successful reception of the response to the assistance information and/or the switch-on request. The WTRU may change to the availability state associated with detecting a presence signal (e.g., On), for example, based on (e.g., after) the WTRU determines (e.g., measures, successfully measures) that the one or more channel conditions (e.g., RSRP, SINR) on one or more measurement resources of the associated cell are above a configured threshold.

The presence indication signal may be one or more of the following: a simplified and/or stripped down SSB signal (e.g., PSS/SSS without PBCH multiplexed); a wide beam and/or omni-directional SSB; a PRS; a CSI-RS; a signal detected based on energy sensing the ether (e.g., a DL signal associated with a wake-up radio, if the WTRU is capable of such hardware to detect it); a PDSCH and/or PDCCH received on a different cell and/or TRP (e.g., on a configured subset of resources, coresets, and/or search spaces); and/or one or more SSBs received on a different cell and/or TRP (e.g., configured on a subset of SSB occasions).

In examples, network energy consumption may be significant and, in some cases, unnecessary, e.g., during quiet hours. The network may turn off small cells and/or may be based on (e.g., rely on) one or more macro-cells for coverage during quiet hours. The network may turn off one or more (e.g., some) sectors and/or gNBs. The network may reduce the power amplifier (PA) power consumption. The network may enable a gNB-side sleep pattern (e.g., without sacrificing WTRU performance considerably). One or more gNBs may combine information (e.g., one or more WTRU measurements, WTRU assistance information, interference status, load information, proprietary information) to determine how to react in response to significant energy consumption (e.g., to add and/or to reduce energy consumption).

From the WTRU perspective, the WTRU may experience a coverage loss when one or more capacity cells activate NES. The WTRU may not be aware that the gNB has transitioned to an NES state (e.g., deep sleep and/or dormant), for example, when the WTRU is in the IDLE and/or INACTIVE state(s). In order to adapt network availability, a WTRU may know whether one or more (e.g., certain) cell signals (e.g., SSBs, paging, SI) are transmitted as usual (e.g., as opposed to not receiving them due to one or more poor/bad channel conditions).

One or more (e.g., certain) WTRU control-plane procedures for connectivity management, WTRU reachability, cell re-selection, and/or WTRU battery consumption may be impacted when one or more gNBs is/are asleep and/or turned off. One or more of the following may apply. One or more paging messages and/or SI may be impacted, as described herein. For example, one or more paging messages may be sent by the core network to one or more (e.g., all) gNBs in RAN paging/notification area. One or more gNBs in the same RAN paging area may transmit the paging message, e.g., even if the WTRU is not in that cell. If one or more gNBs in the same RAN paging area transmit the paging message when the WTRU is not in that cell, for example, one or more (e.g., many) gNBs may wake up to transmit the paging message (e.g., even if some of the gNBs were in a network energy saving state, sleep and/or dormant states and/or there is a single WTRU to page in the whole notification area). Further, having the WTRU battery keep monitoring the regular IDLE mode DRX cycle for paging, in one or more examples, may be considered wasteful. For example, if the gNB is sleeping (e.g., according to a different NES cycle and/or the WTRU is not going to be paged), having the WTRU battery keep monitoring the regular IDLE mode DRX cycle for paging may be considered wasteful.

One or more WTRUs in IDLE mode may not be aware of a gNB's sleep cycle(s) and/or one or more WTRUs in IDLE mode may not be aware whether SI (e.g., including other remaining SI/SIBs) are broadcast by the network according to the regular (e.g., configured) periodicity.

Systems, methods, and/or apparatuses provided herein may be with respect to adaptation of paging occasions. Systems, methods, and/or apparatuses provided herein may be with respect to paging from a different (e.g., second, non-serving) cell. Systems, methods, and/or apparatuses provided herein may be with respect to indication of delayed paging on a sleeping cell. Systems, methods, and/or apparatuses provided herein may be with respect to indication of one or more upcoming paging from a cell different (e.g., second, non-serving) than the first (e.g., serving, camped) cell. Systems, methods, and/or apparatuses provided herein may be with respect to using one or more paging early indication (PEI) subgroups to indicate one or more network energy saving (NES) states and/or delayed paging. Systems, methods, and/or apparatuses provided herein may be with respect to muting a subset of physical downlink control channel (PDCCH) paging occasions (POs) that are not aligned with one or more transmitted synchronization signal blocks (SSBs).

A WTRU may receive configuration information. The WTRU may receive configuration information indicating that the first cell is associated with the second cell. The configuration may include an indication that a second cell is to be used for paging early indication (PEI) monitoring, for example, when a first cell is selected as a camped cell and/or the first cell is in a network energy saving (NES) state. The configuration information may indicate a first PEI subgroup and/or a second PEI subgroup. The first PEI subgroup may be associated with the second cell. The second PEI subgroup may be associated with the first cell. The WTRU may monitor for a PEI via the second cell, for example, based on a determination that the first cell is in the NES state. The WTRU may receive the PEI, for example, via the second cell. The WTRU may monitor for paging. For example, the WTRU may monitor for paging via the second cell on a condition that the PEI received via the second cell indicates the first PEI subgroup. For example, the WTRU may monitor for paging via the first cell on a condition that the PEI received via the second cell indicates the second PEI subgroup. The WTRU may transmit a signal via the first cell when the page is received via the first cell and/or the WTRU may transmit an indication via the second cell that indicates the identity of the first cell when the page is received via the second cell. The WTRU may determine that the first cell is no longer in the NES state, for example, when the page is received via the first cell.

The first cell may be associated with a first discontinuous reception (DRX) cycle. The second cell may be associated with a second DRX cycle. The WTRU may apply the first DRX cycle, for example, on a condition that the WTRU is connected to the first cell. The WTRU may apply the second DRX cycle, for example, on a condition that the WTRU is connected to the second cell. The WTRU may determine a paging frame (PF) and/or a paging occasion (PO) of the first cell or of the second cell, for example, based on an NES-specific WTRU identification (ID).

The WTRU may receive broadcast signaling and/or one or more synchronization signal block (SSB) transmissions. The WTRU may determine that the one or more SSB transmissions and/or one or more POs are delayed and/or skipped on the first cell. The WTRU may determine that a subset of physical downlink control channel (PDCCH) POs of a second DRX cycle are not transmitted, for example, based on the determination that the one or more SSB transmissions and/or one or more POs are delayed and/or skipped on the first cell. The WTRU may receive broadcast signaling and/or one or more SSB transmissions to determine the first cell and/or the second cell. For example, the WTRU may determine the first cell and/or the second cell based on the received broadcast signaling and/or based on one or more properties associated with the one or more SSB transmissions.

The WTRU may determine the second cell. For example, the WTRU may determine the second cell based on one or more channel measurements and/or one or more handover candidate configurations.

The WTRU may determine the NES state of the first cell. The WTRU may determine the NES state of the first cell, for example, based on reception of a primary synchronization signal (PSS) transmission. The WTRU may determine the NES state of the first cell, for example, based on reception of a secondary synchronization signal (SSS) transmission. The WTRU may determine the NES state of the first cell based on both reception of the PSS transmission and reception of the SSS transmission.

The WTRU may receive configuration information that includes an indication that the WTRU is included in a set of one or more WTRUs, for example, on a condition that the set of one or more WTRUs are in one or more cells that are in an NES state. The WTRU may monitor and/or receive one or more group-common indications associated with the set of one or more WTRUs in the NES state.

Systems, methods, and/or apparatuses may be provided herein with respect to NES WTRU grouping. For example, described herein, may be one or more techniques associated with WTRU grouping while a network is in an NES state. For example, one or more DRX configurations may be adapted to match the network's NES state (e.g., including group based DRX).

Described herein are one or more techniques associated with paging while a network is in an NES state. For example, the paging occasions and/or frames may be adapted to match the network's NES state.

A WTRU may monitor paging from an alternative serving cell. One or more of the following may apply. For example, a WTRU may monitor paging on alternative cell(s) if a serving cell (e.g., the best serving cell and/or camped cell) is in a specific availability state (e.g., deep sleep, dormant, and/or off). Additionally or alternatively, a WTRU may monitor paging on alternative cell(s) if a serving cell (e.g., the best serving cell or camped cell) if the WTRU fails to detect a presence signal (e.g., SSB or PDCCH) associated with the serving cell (e.g., possibly on a different SS).

A PEI may include an indication of NES-based subgroups. One or more of the following may apply. A WTRU may monitor for a PEI with a cell specific subgroup if, for example, a serving cell (e.g., the best serving cell) is sleeping. For example, the PEI may be received from the serving cell and/or a different cell. The WTRU may monitor for a PEI via the second cell, for example, based on a determination that the first cell is in the NES state.

Paging may be delayed, for example, based on detection (e.g., or lack thereof) of a cell signal.

A WTRU may be grouped with one or more WTRUs. For example, the WTRU may be grouped with one or more WTRUs for the purpose of NES (e.g., NES WTRU groups). For example, NES WTRU groups may be used: to control one or more (e.g., a number of) WTRUs simultaneously; to indicate a bandwidth part (BWP) switch; to indicate a change in the network's availability state; to indicate a change to the one or more WTRU DRX cycles and/or parameters; for mobility/cell re-selection; paging; and/or to activate and/or deactivate one or more DL measurement resources. A WTRU may receive configuration information that includes an indication that the WTRU is included in a set of one or more WTRUs on a condition that the set of one or more WTRUs are in one or more cells that are in an NES state. The WTRU may monitor and/or may receive one or more group-common indications associated with the set of one or more WTRUs in the NES state. For example, the WTRU may be configured with a NES group RNTI (e.g., an NES group identifier), which may be used to signal and/or communicate with one or more WTRUs in the same serving cell. The WTRU may monitor a cell specific DL resource for reception of control and/or data, and/or to receive one or more group common indications for NES (e.g., group common DCI, an availability state switch command, an NES PCell switch command, etc.).

The WTRU may be configured with one or more (e.g., non-default) NES DRX cycles to use while the WTRU is in the idle, inactive, and/or connected states (e.g., modes). For example, the one or more NES DRX cycles may be configured via the SIB and/or RRC signaling. The one or more NES DRX cycles may be configured for the WTRUs (e.g., all WTRUs) in the cell, and/or may be cell specific (e.g., applied by the WTRU only in the same cell it was configured from). The NES DRX cycles may be used by the WTRU to wake up to read paging (e.g., PDCCH addressed to paging RNTI (P-RNTI)) in the one or more idle and/or inactive states. The NES DRX cycles may be used by the WTRU for scheduling (e.g., PDCCH addressed to cell RNTI (C-RNTI)) while the WTRU is in the one or more connected and/or inactive states. An NES DRX cycle and/or process may be associated with one or more NES states (e.g., one or more availability states). Such association may be defined and/or configured and/or may be associated with one or more SSB periodicities. The WTRU may apply an NES DRX cycle, for example, when the WTRU determines that the serving gNB is an associated energy savings mode (e.g., an availability state).

A WTRU may be configured with a mapping between an SSB pattern, periodicity, and/or periodicity range and/or an NES DRX cycle. One or more of the following may apply. The WTRU may determine to activate, switch to, and/or apply the NES DRX cycle, for example, upon determining that the serving gNB has entered and/or applies the associated NES state.

The WTRU may determine that a given serving cell is in a certain availability state (e.g., sleep, dormant, deep sleep, and/or off) using the one or more techniques described herein (e.g., based on lack of detection of signal, based on one or more received commands from the NW, and/or based on reception of a signal associated with sleep/availability state).

The WTRU may switch to a given C-DRX cycle (e.g., the NES DRX cycle) upon detection of a signal and/or a command (e.g., group common DCI, an availability state switch command, an NES PCell switch command, and/or a group common wake up signal (WUS) received from the gNB). The WTRU may switch to a different DRX cycle (e.g., more frequent On durations and/or a shorter DRX cycle) upon reception of a WUS from the gNB (e.g., a group common WUS, a dedicated WUS, or an NES-specific group/cell common WUS). The WTRU may be configured to detect an NES-specific group/cell common WUS. For example, the WTRU may detect the NES-specific group/cell common WUS based on detecting a differentiated sequence for the DL WUS. If, for example, the serving and/or camped cell is determined to be in NES state, the WTRU may monitor for an NES and/or cell common WUS. If, for example, the WTRU receives a NES state switch command and/or indication, the WTRU may monitor for an NES and/or cell common WUS. The WTRU may monitor WUS with an NES specific sequence, for example, if the camped cell and/or serving cell is in a given NES state (e.g. deep sleep, Off, etc.).

The WTRU may switch to a given C-DRX cycle (e.g., the NES DRX cycle) based on (e.g., after) reception of a DRX switch command and/or based on (e.g., after) reception of paging (e.g., a paging message, PEI with a subgroup configured for NES, paging DCI and/or PDCCH, and/or paging PDSCH). The DRX switch command may be associated with a subset of paging occasions (POs) (e.g., the POs aligned with the NES drx cycle). A first cell may be associated with a first DRX cycle. A second cell may be associated with a second DRX cycle. The WTRU may switch to a given C-DRX cycle (e.g., the NES DRX cycle) upon reception of an availability state switch command (e.g., a group common DCI and/or the like) and/or a WUS. For example, the WTRU may apply the first DRX cycle on a condition that the WTRU is connected to the first cell. For example, the WTRU may apply the second DRX cycle on a condition that the WTRU is connected to the second cell. The WTRU may switch to a given C-DRX cycle (e.g., the NES DRX cycle) upon determining that the cell (e.g., the camped cell, selected cell, the serving cell and/or the best measured cell) is in a given availability NES state (e.g., off, sleep, dormant, etc.). For example, the WTRU may perform one or more channel condition measurements for one or more (e.g., a number of) detectable cells. The WTRU may designate the best measured cell as the cell with the highest measured value(s) (e.g., with respect to channel conditions as described herein).

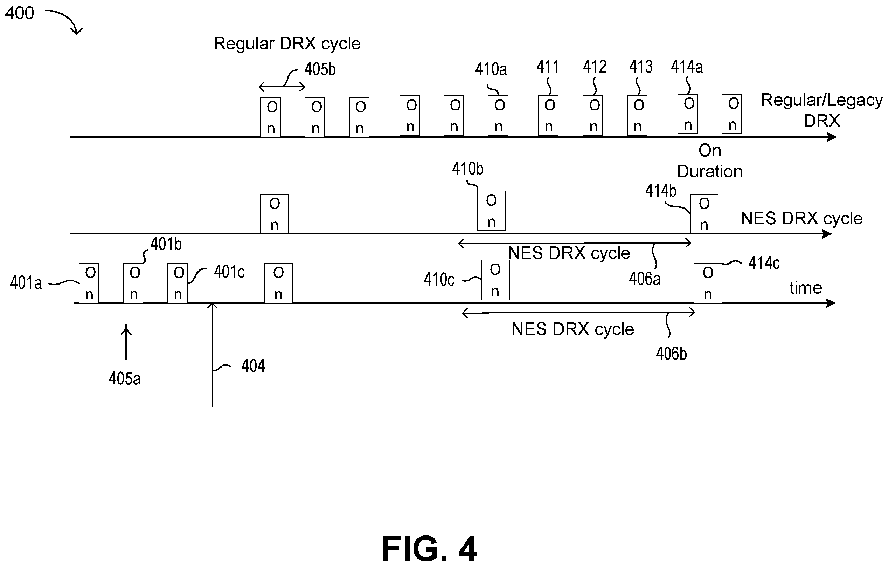

FIG. 4 illustrates an example associated with switching NES DRX cycles while a WTRU is in the idle/inactive states for NES 400. For example, a WTRU may be in a (e.g., second) DRX cycle 405a, 405b (e.g., regular DRX cycle, legacy DRX cycle). At 401a, 401b, and/or 401c, for example, a WTRU may monitor one or more POs, paging, PDCCH, and/or paging PDCCH (e.g., in association with the second DRX cycle 405a, 405b).

At 404, the WTRU may receive a message, as described herein. The message 404 may include a gNB sleep indication, a PO skipping command, and/or determination that the serving gNB is in NES. The WTRU may switch from DRX cycle 405a, 405b to NES DRX cycle 406a, 406b for example, based on the message 404 (e.g., as described herein). The first (e.g., serving, camped, best) cell may be associated with a first DRX cycle 406a, 406b. The second (e.g., non-serving) cell may be associated with a second DRX cycle 405a, 405b. The WTRU may apply the first DRX cycle (e.g., 406a, 406b) when connected to the first (camped, serving, best) cell. The WTRU may apply the second DRX cycle 405a, 405b when connected to the second (e.g., non-serving) cell.

In examples, one or more POs may be skipped. For example, skipping paging occasions on a (e.g., second) DRX cycle 405a, 405b and/or configuration may imply that the WTRU monitors paging, POs, PDCCH, and/or paging PDCCH on a different (e.g., second) DRX cycle (e.g., the NES DRX cycle 406). The WTRU may skip monitoring at 411, 412, and/or 413 (e.g., in a second DRX cycle 405a, 405b) if the WTRU is monitoring in a second DRX cycle 406a, 406b at 410b, 410c, 414b, 414c. The WTRU may determine that a subset of PRACH resources is applicable for one or more DRX cycle(s) (e.g., to be used upon paging reception). For a random access (RA) initiated based on (e.g., after) paging reception, the WTRU may (e.g., only) use and/or select one or more PRACH resources (e.g., ROs and/or preambles) associated with the monitored DRX cycle on which the WTRU was paged.

Paging may be performed based on the NES state. One or more of the following may apply. The WTRU may monitor paging from a cell if (e.g., only if) the cell is in one or more (e.g., certain) availability states (e.g., ON, and/or sleep), and/or may (e.g., otherwise) skip waking up on DRX cycles of that cell that coincide with occasions where the cell is in one or more other availability states (e.g., Off, deep sleep, and/or dormant). The WTRU may monitor for gNB wake up signaling associated with DRX and/or paging (e.g., DCI of power saving (DCP)) in (e.g., only in) a subset of the cell's availability states (e.g., On or sleep). For example, DCP may include DCI with CRC scrambled by power savings RNTI (PS-RNTI). The WTRU may use (e.g., for power saving purpose), PS-RNTI to determine if the WTRU monitors PDCCH on the next occurrence of the connected mode DRX on-duration.

In examples, a WTRU may be configured to transmit a tracking area update (TAU) and/or a RAN paging area update (RAU) on (e.g., only on) a subset of cells in one or more (e.g., certain) availability states. For example, the WTRU may transmit TAU and/or RAU on (e.g., only on) a subset of cells, e.g., macro cells, based on (e.g., depending on) the availability state (e.g., if the camped cell switches to a certain availability state, such as off or deep sleep). The WTRU may avoid transmitting one or more TAUs on capacity boosting cells and/or cells with a determined availability state of off, dormant, and/or sleep. The WTRU may trigger and/or transmit an RAU and/or a TAU, for example, if the WTRU performs mobility and/or cell reselection to a cell in NES state, which may be based on (e.g., dependent on) the change of NES state between the camped cell and the re-selected cell. For example, the WTRU may trigger a RAU and/or a TAU if the WTRU reselects from an NES cell (e.g., an NES only cell) to a non-NES cell (e.g. a cell not capable of NES and/or serves one or more legacy WTRUs). For example, the WTRU may trigger a RAU and/or a TAU if the WTRU reselects from an NES cell (e.g., an NES only cell) to a non-NES cell (e.g. a cell not capable of NES and/or serves one or more legacy WTRUs) even if the WTRU remains the same paging and/or tracking area. The WTRU may determine whether a cell is an NES-only cell (e.g., a cell serving only NES-capable WTRUs) or a non-NES only cell (e.g., a cell that serves both legacy and NES-capable WTRUs) from broadcast signaling (e.g. from SIB information). Additionally or alternatively, the WTRU may determine (e.g., implicitly determine) whether a cell is an NES-only cell or a non-NES only cell based on one or more SSB reception properties (e.g. upon reception of an NES SSB, an on demand SSB, and/or an SSB an NES-only occasion).

Paging of sleeping gNBs and/or paging from alternate cells may be reduced. One or more of the following may apply. Paging messages may be sent by the core network to the (e.g., all) gNBs in RAN paging/notification area (e.g., for inactive WTRUs) and/or a tracking area. One or more gNBs in the same RAN paging area may transmit the same paging message (e.g., even if the WTRU is not in that cell). If the gNBs in the same RAN paging area transmit the same paging message, for example, one or more (e.g., many) gNBs may wake up to transmit the paging (e.g., if some of the gNBs are in a NES state, sleep state, and/or dormant states).

If a WTRU's current best server (e.g., the camped cell, selected cell, the best serving cell according to one or more L3 channel measurements) is in a NES state, the WTRU may skip monitoring POs on that cell (e.g., suspend PDCCH monitoring and/or monitor PDCCH using an NES DRX cycle). The WTRU may ignore the configured and/or default PO cycle and/or monitor paging using the NES DRX cycle if, for example, the WTRU determines that the serving gNB's current/prior NES state is in a certain availability state. Additionally or alternatively, the WTRU may ignore the configured and/or default PO cycle and/or monitor paging using the NES DRX cycle if the WTRU has not received an updated NES state change command, and/or if a timer associated with an availability state change has expired and/or elapsed.

The WTRU may continue to use a DRX cycle and/or may wake up to monitor paging from a different or alternate serving cell (e.g. a cell in CA with the camped cell and/or an anchor cell). For example, in idle and/or inactive state, a WTRU may measure and/or monitor one or more signals from one or more alternate serving cell(s), when the best serving cell is in a sleep and/or dormant mode (e.g., the camped cell, selected cell). The WTRU may receive an indication from a serving cell indicating which alternate cell(s) to monitor paging from while the serving cell (e.g., the camped cell, selected cell, and/or best measured cell) is in a (e.g., NES) state. The WTRU may be configured (e.g., pre-configured. predefined) to monitor one or more (e.g., certain) specified cells related to the cell in NES state, e.g., alternate cells, cells part of the same gNB (e.g. cells in CA with the camped cell), and/or cells from the secondary node (SN) and/or the master node (MN) (e.g. cells in DC with the camped cell). The WTRU may monitor paging according to a DRX cycle associated with the monitored alternate cell. The WTRU may monitor paging on an alternative serving cell (e.g., an alternative best serving cell, a second cell, such as in CA; an anchor cell; and/or a non-selected cell), a neighboring cell to the best server, and/or a candidate cell (e.g., if the camped cell or selected cells in a certain availability state, such as sleep, dormant, and/or off) for handover. For example, the WTRU may monitor paging on a candidate cell for handover if the best serving cell (e.g., the camped cell, selected cell) is in one or more availability states (e.g., sleep, dormant, and/or off). A WTRU may monitor paging on an alternative cell if the WTRU detects a presence DL signal (e.g., an SSB, PDCCH, PBCH, and/or an RS) associated with the best serving cell (e.g., the camped cell, selected cell), for example, within a period of time before the PO.

The WTRU may determine which alternate cell(s) to monitor paging based on one or more of the following. The WTRU may determine to monitor paging based on one or more measured channel conditions. For example, the WTRU may monitor paging from one or more alternate cells from (e.g., only from) cells that are measured with a measured channel condition above a configured threshold (e.g., RSRP and/or RSRQ above a threshold). The WTRU may determine to monitor paging from one or more alternate cells based on the respective availability state associated with the respective alternative cell. The WTRU may monitor paging from an alternate cell if (e.g., only if) the cell is in one or more (e.g., certain) availability states. The WTRU may determine to monitor paging from an alternate cell based on the reception of a paging PDCCH. For example, the WTRU may monitor an alternate cell if the WTRU detects a PDCCH from such cell. The WTRU may determine to monitor paging from an alternate cell based on the reception of synchronization and/or RS signals associated with the alternate cell.

The WTRU may (e.g., further) monitor the alternate cell if the WTRU is downlink synchronized to that alternate cell (e.g., based on reading and/or receiving PSS/SSS, SIB(s), SI, and/or PBCH associated with the cell). The WTRU may determine to monitor paging from an alternate cell based on an indication received by the WTRU. For example, the indication may be received by the WTRU via one or more prior paging messages (e.g., part of one or more prior paging messages), and/or signaled in (e.g., and/or inferred from) one or more availability state change commands. The WTRU may determine to monitor paging from an alternate cell based on the RRC connection state of the WTRU (e.g., whether the WTRU is in the idle and/or inactive state). Additionally or alternatively, the WTRU may determine to monitor paging from an alternate cell based on whether the WTRU has its context maintained.

A WTRU may determine (e.g., identify) the measured cell (e.g., best measured cell) and/or the selected cell with the highest (e.g., the best) L3 measurements (e.g., RSRP). The WTRU may camp on a cell that does not have the highest (e.g., best) measured channel conditions (e.g., RSRP and/or RSRQ). The WTRU may monitor paging on one or more other alternate cells, for example, based on one or more of the following. The WTRU may monitor paging on one or more other alternate cells if the WTRU is in the RRC idle and/or RRC inactive state. The WTRU may monitor paging on one or more other alternate cells based on the type of data being transmitted. For example, the WTRU may monitor paging on one or more alternate cells if one or more data radio bearers (DRBs) is/are resumed (e.g., DRBs configured for small data, DRBs configured from low latency communications, and/or DRBs configured by the network for such purpose). The WTRU may monitor paging on one or more other alternate cells based on the type of: active DRBs, service, and/or QoS (e.g., flows configured, activated, and/or resumed). The WTRU may monitor paging on one or more other alternate cells based on the WTRU type and/or capability.

The WTRU may determine a differentiated P-RNTI (e.g., or use an alternative P-RNTI) for NES. Additionally or alternatively, the WTRU may use the same P-RNTI for NES (e.g., if the best serving cell, such as the camped cell or selected cell is determined to be in a certain availability state such as sleep, dormant, and/or off). The WTRU may use an alternative P-RNTI for DCI reception. For example, the alternative P-RNTI may be selected based on the cell from which the WTRU monitors paging. The WTRU may receive an indication via the paging message (e.g., in the short message, part of the paging message) of the cell ID (e.g., pointing to the cell ID) from which the PDSCH will be received and/or of the timing of the paging message. The WTRU may use an NES group RNTI for the reception of paging (e.g., if paging is monitored on a non-best serving cell and/or a non-serving cell). The WTRU may monitor a second paging search space (e.g., and/or coreset) associated with paging reception on a second serving cell (e.g. second serving cell in CA, non-best serving cell, and/or an alternative cell/anchor cell). The WTRU may be configured with the second paging search space. Additionally or alternatively, the WTRU may acquire the second paging search space via system information and/or broadcast signaling of the second (e.g., non-best) serving cell.

A WTRU may receive configuration information. The WTRU may be configured with a paging subgroup associated with NES (e.g., WTRU NES subgrouping). The WTRU may receive configuration information including an indication that a second cell is to be used for paging early indication (PEI) monitoring when a first cell is selected as a camped cell and the first cell is in a network energy saving (NES) state. The configuration information may indicate a first PEI subgroup and a second PEI subgroup. The configuration information may indicate the first cell is associated with the second cell. The WTRU may be configured to monitor PEI at the same time as monitoring for paging. The WTRU may be configured to monitor PEI at a different time (e.g., separate) than monitoring for paging. One or more WTRU NES subgroups may be cell specific and/or may apply to the WTRUs served by the cell in NES state (e.g., may apply to all WTRUs served by the cell in NES state). One or more WTRU NES subgroups may be applicable if a serving cell (e.g., the best serving cell, the camped cell, and/or the selected cell) is in an NES state and/or availability state (e.g., off, sleep, and/ or dormant). One or more (e.g., each) subgroups may be associated with one or more availability states. The WTRU may monitor a paging early indication (PEI) corresponding to such subgroup. For example, a PEI may include one or more of the following: the reception (e.g., or lack thereof) of a presence indication signal; the reception (e.g., or lack thereof) of a NES state/network availability state change command and/or broadcast signaling; a determination that the best serving cell is in a given availability state (e.g., off, sleep, and/or dormant). The WTRU may monitor for one or more POs based on (e.g., following) the reception of a PEI from an alternate and/or non-best serving cell. Additionally or alternatively, the WTRU may monitor for one or more POs from an alternate and/or non-best serving cell be based on receiving the PEI with a specific subgroup (e.g., the NES paging subgroup).

The WTRU may monitor the PDCCH in its PO for paging if, for example, the subgroup to which the WTRU belongs is paged (e.g., as indicated via the associated PEI). The WTRU may monitor the paging in its PO if the WTRU is unable to find its subgroup ID within the PEI configurations in a cell and/or if the WTRU is unable to monitor the associated PEI occasion corresponding to its PO.

The WTRU may monitor paging on a non-serving cell (e.g., second cell, a non-selected cell, and/or non-best serving cell) with the subgroup ID associated with the best serving cell. For example, the WTRU may monitor paging on a non-serving cell if the best serving cell is in a NES state and/or in a given availability state associated with the subgroup. The WTRU may monitor for paging via the second cell on a condition that the PEI received via the second cell (e.g., non-serving cell) indicates the first PEI subgroup and/or the WTRU may monitor for paging via the first cell on a condition that the PEI received via the second cell indicates the second PEI subgroup. The WTRU may transmit an indication via the second cell (e.g., non-serving cell) that indicates the identity of the first cell, for example, when the page is received via the second cell (e.g., non-serving cell). The WTRU may monitor paging on POs associated with the best serving cell (e.g., on POs associated with the NES DRX paging cycle), for example, if the WTRU receives a paging indication from a different cell indicating an upcoming paging on the best serving cell (e.g., a PEI with a subgroup associated with the best serving cell).

One or more paging frame (PF) and/or PO determinations for a gNB in an NES state may be performed. One or more of the following may apply. A WTRU may determine that a paging frame (PF) occurs when the system frame number (SFN) mod T = (T div N) x (WTRU_ID mod N). The WTRU may determine one or more of the following: the DRX cycle length, an alternative value for T, and/or the applicable DRX cycle from the active availability state, e.g., as shown in FIG. 4. The WTRU may be configured with a non-default and/or an NES value to apply for T (e.g., the DRX cycle length). The WTRU may scale T by an NES factor, which may be configured by the network (e.g., if the serving cell is in a NES state). The WTRU may determine an alternative value for N, for example, based on (e.g., depending on) the active availability state. The WTRU may be configured with a non-default and/or a NES value to apply for N. The WTRU may determine the value of N (e.g., and/or scale the value of N) if, for example, the serving gNB is in a NES state (e.g., a non-default availability state). In examples, the WTRU may scale the configured value for N and/or T (e.g., the default N configured in SIB) by the ratio between default SSB periodicity and the active SSB periodicity (e.g., and/or SIB periodicity rather than SSB).

A WTRU may be configured with a non-default and/or an NES value to use as a WTRU_ID. For example, the WTRU may determine a PF and/or one or more PO of the first (e.g., serving, camped, best) cell and/or of the second (e.g., non-serving) cell based on a NES-specific WTRU_ID. The WTRU may determine the value of WTRU_ID (e.g., scale the WTRU-ID, add an offset to the WTRU-ID, etc.) if the serving gNB is in a NW energy savings state (e.g. a non-default availability state). In examples, the WTRU may use the NES WTRU_ID value if it determines that the camped cell, anchor cell, and/or the serving cell is in a certain NES state (e.g. sleep and/or off). The WTRU may use the NES WTRU_ID value, for example, if the WTRU receives an NES state change indication for the camped cell, anchor cell, and/or the serving cell. The WTRU may scale the configured value for N and/or T (e.g. the default N configured in SIB), for example, based on the ratio between a default SSB periodicity and an active SSB periodicity (e.g., and/or SIB periodicity rather than SSB). The WTRU may scale the configured value for N or T (e.g. the default N configured in SIB), for example, based on the ratio between a default SIB periodicity and an active SIB periodicity. The WTRU may (e.g., further) check criterion for PF occurrence if (e.g., only if) the WTRU detects an SSB, a presence indication, and/or a DL signal prior to the start of the SFN and/or the frame, and/or part of the same frame. The WTRU may skip PDCCH monitoring on that frame.

The WTRU may apply an offset to the SFN to determine a paging frame. For example, the WTRU may subtract a gNB sleep counter from the SFN number, whereby the gNB sleep counter may include one or more increments for one or more (e.g., each) frame(s) the gNB was in an NES state. The WTRU may set the counter to 0 if the serving cell is not in an energy saving state.

One or more PDCCH monitoring occasions within a PO may be adapted. One or more of the following may apply. The WTRU may skip monitoring a subset of PDCCH monitoring occasions associated with one or more (e.g., multiple) beams if, for example, the serving cell is transmitting a stripped down SSB (e.g., an NES SSB and/or a partial SSB). For example, the WTRU may determine (e.g., assume) that the short message (e.g., and/or the paging TB that includes it) associated with a multi-beam cell is transmitted on a subset (e.g., one) of the default monitoring occasions (e.g., rather than the default repetition on one or more (e.g. all) SSBs).

The WTRU may be configured with an alternate search space and/or RNTI (e.g., a non-default and/or a NES search space and/or RNTI) for PDCCH paging monitoring, which may be based on the paging cell. For example, the WTRU may monitor for one or more alternative values of firstPDCCH-MonitoringOccasionOfPO and/or nrofPDCCH-MonitoringOccasionPerSSB-InPO. The WTRU may monitor the PDCCH based on the one or more alternative values (e.g., and/or NES). The WTRU may monitor the NES search space for paging if, for example, the serving cell is in a NES state (e.g., if the WTRU determines that the serving cell is in a certain availability state). The WTRU may use the alternate NES search space if the WTRU determines that paging is delayed, which may be based detecting the presence signal (e.g., or lack thereof) , as described herein.

In examples, if the NES paging search space is configured, the WTRU may determine one or more (e.g., the number of) paging occasions within the frame and/or the timing of those POs. The WTRU may determine which PDCCH monitoring occasions, POs, and/or which PFs to monitor based on reception of PDCCH on such search space and/or RNTI. For example, the WTRU may monitor POs and/or which PF, using a different DRX cycle (e.g. the NES drx cycle), based on reception of paging DCI (e.g., paging DCI addressed to P-RNTI, paging DCI addressed to NES-RNTI, and/or paging DCI addressed on an alternative NES search space). The WTRU may determine the timing of the paging occasion to be in the part of the frame that aligns with the gNB's SSB transmission. The WTRU may determine a value for i_s (e.g., the slot number in which the paging occasion occurs) if the NES paging search space is configured.

The WTRU may determine a different number of PDCCH monitoring occasions per PO. For example, WTRU may determine (e.g., assume) a different number of PDCCH monitoring occasions per PO if the NES paging search space is configured. For example, the WTRU may determine (e.g., assume) that the number of PDCCH monitoring occasions per PO is the same number of SSBs transmitted by the gNB in the active availability state (e.g., and/or a scalar of that number of SSBs).

The WTRU may skip PDCCH monitoring for one or more PDCCH monitoring occasions associated with default SSBs that are not transmitted (e.g., due to the gNB being in a certain availability state). The WTRU may skip PDCCH monitoring in one or more POs and/or PFs, for example, if the serving cell is in a certain availability state (e.g., sleep, dormant, and/or off). For example, the WTRU may monitor (e.g. only monitor) one or more PDCCH monitoring occasions corresponding to received SSBs (e.g. with a measured channel condition above a threshold). The WTRU may not monitor (e.g. may skip monitoring) one or more other PDCCH monitoring occasions (e.g., PDCCH monitoring occasions for which an SSB was not detected on the associated beam).

The WTRU may determine that a subset of SSBs within an SSB burst are not transmitted and/or muted. The WTRU may determine that an SSB in a burst is missing if, for example, the difference in measurement (e.g. L1 SS-RSRP) varies and/or differs by a margin larger than a configured and/or specified threshold. The WTRU may (e.g., further) determine whether an SSB is transmitted based on one or more channel conditions (e.g., the absolute channel condition measurement(s) associated with the SSB) For example, the WTRU may determine whether an SSB is transmitted based on whether one or more channel conditions is/are larger or lower than a configured and/or specified threshold. For example, the WTRU may measure SSB1 with x dB and/or SSB2 with y dB. If the difference of y dB subtracted from x dB is larger than a first threshold (e.g., (x-y) > a first threshold), for example, the WTRU may determine that SSB2 is missing. The WTRU may determine that SSB1 is transmitted if x is larger than a second threshold.

The WTRU may determine that one or more SSBs within a burst are not transmitted if, for example, the WTRU detects one or more SSBs associated with NES (e.g. a simplified SSB, a stripped down SSB, an SSB with PSS only, SSB without PBCH etc.). The WTRU may determine that the SSB burst is using a different structure for NES if, for example, the WTRU detects a PSS and/or SSS using a differentiated sequence for NES and/or an NES state. For example, the WTRU may determine the NES state of the first (e.g., serving, best, camped) cell based on reception of a PSS transmission and/or a SSS transmission. The WTRU may determine the first (e.g., serving, camped, best) cell and/or the second (e.g., non-serving) cell based on one or more properties associated with the one or more SSBs and/or based on one the received broadcast signaling. The WTRU may be configured with an alternative SSB structure for NES, whereby the number of beams and/or SSBs within a burst is reduced and/or tailed to the WTRU (e.g. by configuration and/or by dedicated signaling such as RRC and/or DCI).

Additionally or alternatively, the WTRU may be configured with an alternative SSB structure in broadcast information (e.g. in SIB associated with NES). For example, the configured alternative SSB structure may include an NES SSB. For example, the alternative SSB structure (e.g., NES SSB) may indicate the WTRU, the one or more (e.g., the number of) SSBs per burst, and/or a subset of SSBs that may or may not be transmitted in one or more NES states. The configuration of an alternative NES SSB structure may be configured and/or determined per NES state. The configuration of an alternative NES SSB structure may be configured and/or determined as a function of receiving an NES state change signaling. In examples, the WTRU may read the SIB IE with SSB position in burst, and/or may determine whether one or more SSBs are going to be muted in one or more NES states. In examples, the WTRU may read the SIB IE with SSB position in burst, and/or may determine whether the SSB is present or not in one or more NES states.

Paging may be delayed, for example, based on the detection (e.g., or a lack thereof) of a cell signal. One or more of the following may apply. A WTRU may skip paging until the next NES DRX occasion, for example, upon reception of a signal indicating that one or more (e.g. all) paging from the cell is delayed until the next NES DRX occasion.

The WTRU may not wake up (e.g., skip waking up) for paging if, for example, the WTRU has not detected a signal from the serving cell (e.g., a presence indication and/or presence signal). The WTRU may skip one or more DRX occasions (e.g., PF and/or POs) until the next NES DRX occasion, for example, if the WTRU fails to detect a presence indication signal. The WTRU may maintain a counter, which may be used to determine whether the WTRU can skip one or more (e.g., the remaining) POs until the next NES DRX cycle.

The timing of one or more subsequent paging and/or SI transmission occasions may be determined, for example, based on whether the WTRU detects a transmission from the network. For example, if the WTRU received a DCI for paging, a presence signal, and/or for SI transmission during an awake time, the WTRU may determine a future paging and/or SI transmission occasion (e.g., from a default set of timing). If the WTRU (e.g., only) receives a signal indicating channel acquired (e.g., and does not receive anything else) during an awake time, for example, the WTRU may determine to skip a subset of one or more future paging and/or SI transmission occasions. If the WTRU (e.g., only) receives a signal indicating channel acquired (e.g., and/or does not receive anything else) during an awake time, for example, the WTRU may determine the timing from a different set of configuration parameters (e.g., non-default and/or an NES DRX cycle). If the WTRU receives no transmissions during an awake time, the WTRU may determine a future paging or SI transmission occasion from a third function (e.g., and/or a function using a third set of one or more inputs).

The WTRU may receive a paging delay indication and/or signal. For example, the WTRU may receive the paging delay indication from a different cell than the best serving cell (e.g., the camped cell, selected cell). The WTRU may determine that paging will be delayed and/or postponed by one more paging occasions, for example, based on receiving the paging delay indication. For example, a bit in the short message and/or PEI may indicate that the WTRU is to monitor one or more additional paging occasions (e.g., even if P-RNTI was received). A bit in the short message may indicate the cell that the WTRU is to monitor for paging reception and/or PDSCH reception. In examples, the WTRU may skip one or more POs (e.g., not wake up from DRX to monitor a PO) unless the WTRU is told (e.g., explicitly told, via a PEI, only the WTRU has received a PEI) to wake up for a PO. The WTRU may skip one or more POs if the WTRU determines the cell is in a given availability state. The WTRU may skip POs if the time elapsed since the last availability state change (e.g., and/or state change command reception) is greater than (e.g., or less than) a (e.g., configured) threshold. For example, the WTRU may start and/or resume monitoring for one or more (e.g., regular) POs in response to receiving a PEI (e.g., new and/or updated PEI). One or more of the following may apply. The WTRU may start and/or resume monitoring for one or more (e.g., regular) POs in response to receiving a PEI (e.g., new and/or updated) PEI based on (e.g., after) the WTRU determines the cell is a given availability state. The WTRU may start and/or resume monitoring for one or more (e.g., regular) POs in response to receiving a PEI (e.g., new and/or updated PEI) if the time elapsed since the last availability state change (e.g., and/or state change command reception) is greater than (e.g., or less than) a (e.g., configured) threshold. For example, the WTRU may start and/or resume monitoring for one or more (e.g., regular) POs based on (e.g., in response to) receiving a PEI (e.g., new and/or updated PEI) if a state change command.

A WTRU may determine that paging is delayed and/or skipped on one or more cells (e.g. one or more cells in CA with the camped cell) based on reception of an indication in broadcast signaling (e.g. indicated in MIB and/or one or more other SIBs) and/or from one or more property(ies) of the received SSB (e.g. NES SSB). For example, the WTRU may receive (e.g., in MIB or SIB) an indication of the NES paging occasion and/or frame timing, an indication to skip decoding paging PDSCH and/or PDCCH, an indication that paging is delayed, and/or an indication for the WTRU to monitor paging using a different DRX cycle (e.g. the NES paging cycle). The WTRU may receive (e.g., in a MIB or SIB) an indication indicating a wake up indication and/or signal (e.g., to monitor one or more upcoming paging occasions and/or frames, including an indicator for paging). The WTRU may receive broadcast signaling and/or the WTRU may receive one or more SSB transmissions. The WTRU may determine that one or more SSB transmissions and/or one or more POs are delayed and/or skipped on the first (e.g., serving, camped, best) cell, for example, based on the one or more received POs and/or one or more received SSB transmissions.

A WTRU may transmit an RA and/or WUS in response to paging. One or more of the following may apply. A WTRU may respond with an UL indication (e.g., RACH and/or a NES WUS) to indicate to the network which cell the WTRU is camping on and/or the best measured cell (e.g., and/or the camped cell, selected cell), for example, upon reception of paging. For example, the UL indication may be a NES wake up signal, RACH, PUCCH, and/or PUSCH. The WTRU may transmit a signal via the first cell, for example, when the page is received via the first cell. The WTRU may indicate the identity of the first cell by transmitting the signal via the first cell.

UL indication may include indication information to the network (e.g., part of UCI, MAC CE, and/or RRC message part of the PUSCH payload). The UL indication may indicate the WTRU's best serving cell and/or the best measured cell (e.g., the camped cell and/or the selected cell). For example, the WTRU may transmit an indication via the second cell that indicates the identity of the first cell when the page is received via the second cell. The indication may include an RRC message, e.g., an RRC connection resume request and/or an RRC connection re-establishment request. The UL indication may include the WTRU's identity and/or RNTI (e.g., C-RNTI and/or inactive RNTI (I-RNTI) and/or international mobile subscriber identity (IMSI)). The WTRU may include an RRC connection resume request if, for example, the WTRU is in inactive state and/or has one or more resources applicable for small data transmission. The WTRU may include an RRC re-establishment request, for example, if it is in IDLE mode. The WTRU may monitor for a PDSCH and/or PDCCH reception based on (e.g., following) the transmission of the UL signal indication and/or based on (e.g., after) successful completion of the RA procedure (e.g., to receive a DL TB, a paging message, and/or an uplink grant).

The WTRU may transmit an UL signal (e.g., RA and/or WUS) in response to paging. One or more of the following may apply. The WTRU may transmit an UL signal (e.g., RA and/or WUS) in response to paging received from a first cell that is different than a second cell on which the uplink signal and/or indication is transmitted (e.g., paging is received from a non-best cell, second cell, non-selected cell, non-serving cell, and/or an alternate cell). For example, the first cell may include: the cell from which the WTRU is monitoring paging in the default (e.g., non-NES) state, the last connected cell, the cell with the best L1 and/or L3 measurement(s) (e.g., the cell with the best measured SS-RSRP), and/or the cell from which the last availability state change command was received. The first cell may indicate the second cell. The second cell may be determined (e.g., pre-determined), for example, to be part of the same gNB of the first cell and/or the cell in the same cell group of the first cell. The second cell may be in dual connectivity (DC) with the first cell (e.g., the first cell may be in the MN and/or second cell may be in the SN, or vice-versa). The second cell may be in CA (e.g., part of the same MAC entity as the first cell) with the first cell. The WTRU may determine (e.g., determine itself, determine on its own) the second (e.g., non-serving) cell, e.g., based on one or more channel measurements and/or one or more handover candidate configurations. An association between the first cell and the second cell may be configured by the network (e.g., by dedicated and/or broadcast signaling part of SI).

The WTRU may transmit an UL signal (e.g., RA and/or WUS) in response to receiving PEI. For example, the received PEI may include one or more of the following: PEI with a configured NES subgroup received; PEI with the subgroup associated with the availability state of the best measured cell (e.g., and/or the camped cell, selected cell) is received; and/or PEI with a subgroup corresponding to the WTRU's serving/best measured cell.

The WTRU may transmit an UL signal (e.g., RA and/or WUS) if the best measured cell is in a certain availability state and/or NES state. For example, the WTRU may transmit an UL signal (e.g., RA and/or WUS) if the one or more measured channel conditions to the paging cell is less than (e.g., or greater than) a threshold. For example, the WTRU may transmit an UL signal (e.g., RA and/or WUS) if the one or more measured channel conditions to the best measured cell (e.g., and/or the camped cell and/or selected cell) is greater than (e.g., or less than) a threshold.

The WTRU may transmit an UL signal (e.g., RA and/or WUS) if an L3 measured condition is below (e.g., or greater than) a threshold (e.g., L3 RSRP and/or SINR).

The WTRU may transmit an UL signal (e.g., RA and/or WUS) if an L2 measured condition is below (e.g., or greater than) a threshold (e.g., Qin, block error rate (BLER), L1-RSRP, L1-SINR).

The WTRU may transmit an UL signal (e.g., RA and/or WUS) based on whether the WTRU is camped on the cell on which the uplink signal and/or indication is transmitted to.

The WTRU may determine (e.g., assume) an availability state change for the cell on which the UL signal was transmitted (e.g., and/or a certain availability state to be active, such as, on). For example, the WTRU may determine (e.g., assume) an availability state change for the cell upon transmitting such uplink signal based on (e.g., upon, after) reception of a network response to the UL signal, and/or based on (e.g., upon) successful completion of the procedure related to the transmitted uplink signal (e.g., successful RA completion and/or WUS reception).

The WTRU may transmit an NES wake up signal. For example, the WTRU may transmit an NES wake up signal if the WTRU is camped on the cell, and/or if the WTRU is in the inactive state (e.g., following the reception of paging from a second cell). The NES wake up signal and/or indication may be transmitted on one or more PUSCH, PUCCH, and/or PRACH resources.

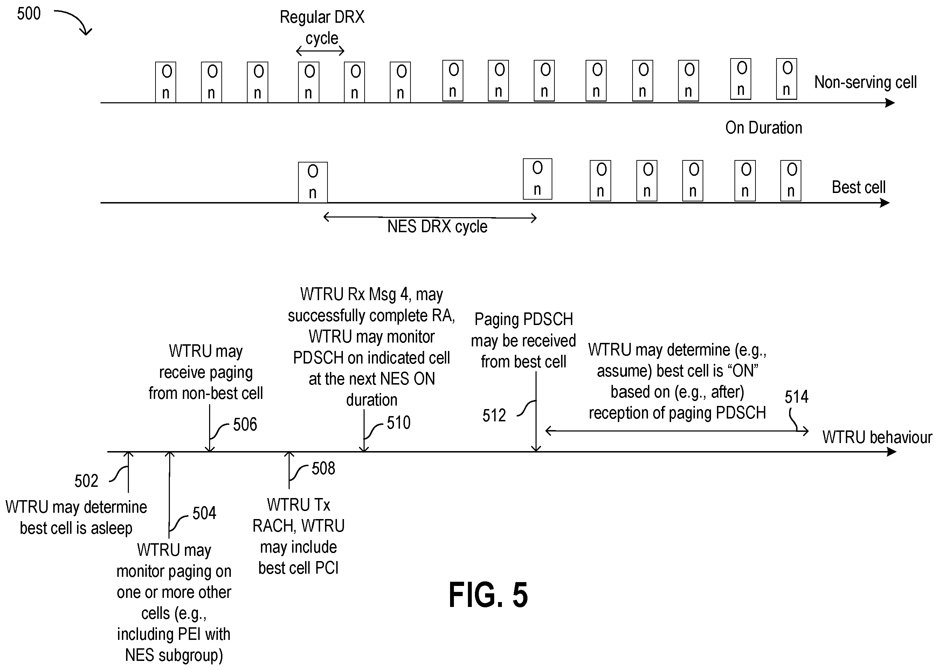

In examples, the network may not know which cell the WTRU is camped on and/or located (e.g., the best measured cell by the WTRU). If the network does not know the cell where the WTRU is camped and/or located, for example, the network may page the WTRU in one or more (e.g., some) cells that are ON. The WTRU may respond with an UL signal that indicates to the network which cell the WTRU is camping on and/or best cell (e.g., RACH on the best cell), for example, based on (e.g., upon) receiving the paging (e.g., from a second cell other than the first cell). The network may turn on and/or change the availability state associated with that cell (e.g., the cell that the WTRU is camping on) and/or page the WTRU (e.g., and/or the network may transmit the PDSCH transmission to the WTRU) on that cell (e.g., as shown in FIG. 5).

FIG. 5 illustrates an example associated with a sample paging procedure in NES state 500, including paging reception from a second cell. The WTRU may receive configuration information that includes an indication that a second cell is to be used for PEI monitoring when a first cell is selected as a camped cell and/or the first cell is in a NES state. The configuration information may indicate a first PEI subgroup and/or a second PEI subgroup. The configuration information may indicate the first (e.g., camped, best, serving) cell is associated with the second (e.g., non-serving) cell.

At 502 the WTRU may determine that the best serving cell is in a NES state (e.g., sleep, dormant, and/or off). For example, the WTRU may determine that the best serving sell is in an NES state based on the reception of a NES state switch command (e.g., group common DCI), and/or lack of detection of a periodic presence signal associated with the cell (e.g., SSB, RS, and/or PDCCH).

The WTRU may monitor the PDCCH for paging on a sleeping serving cell using a configured non-default NES DRX configuration, for example, based on (e.g., following) the determination that the cell is in the associated availability state. The WTRU may skip the one or more on durations (e.g., the one or more default on durations) that are not aligned with gNB active time (e.g., not overlapping and/or within a time from SSB and/or PDCCH reception). For example, the WTRU may monitor one or more certain PDCCH occasions (e.g., only PDCCH occasions associated with the cells NES state). If, for example, the serving cell is transmitting a stripped down SSB, the WTRU may skip monitoring a subset of PDCCH monitoring occasions (e.g., PDCCH monitoring occasions within a PO associated with multiple beams). For example, the WTRU may determine that a subset of PDCCH POs of a second DRX cycle are not transmitted based on a determination that one or more SSBs and/or one or more POs are delayed and/or skipped on the first (e.g., serving, camped, best) cell.

The WTRU may skip monitoring one or more of the next on duration(s) (e.g., next default on duration(s)) on the best cell and/or on the serving cell, e.g., until the next NES on duration.. For example, the WTRU may skip monitoring one or more of the next default on duration(s) on the best/serving cell the based on the reception (e.g., or the lack thereof) of an indication (e.g., from the serving cell) to monitor one or more on durations of the default on durations. Additionally or alternatively, the WTRU may skip monitoring one or more of the next default on duration(s) on the best and/or serving cell based on (e.g., after) reception from the serving cell or lack of reception of DL signal (e.g., a presence indication) with a strength above a threshold.

At 504, the WTRU may monitor paging on one or more other cells. The WTRU may monitor paging on a best cell and/or the WTRU may monitor paging on one or more other (e.g., non-best) cells. For example, the WTRU may monitor PDCCH for paging on a second cell (e.g., non-best cell). The WTRU may monitor on a search space associated with the second cell. The WTRU may use a P-RNTI (e.g., the same P-RNTI, and/or an alternative P-RNTI associated with NES states) to monitor the PDCCH for paging from the second cell. The WTRU may monitor for a PEI via the second cell, for example, based on a determination that the first cell is in a NES state. The WTRU may monitor for a PEI with a cell specific subgroup and/or a NES subgroup from the first cell (e.g., serving cell) and/or a second cell. The WTRU may monitor the next on duration(s) on the first cell (e.g., the serving cell or the best measured cell) based on receiving an indication from the second cell (e.g., the non-best cell) that includes a PEI that is associated with a NES subgroup, and/or a subgroup corresponds to the first cell and/or cells in NES states. The WTRU may skip one or more on durations and/or POs associated with other cells (e.g., until the next NES on duration of the first cell), for example, upon receiving such an indication.

At 506, the WTRU may receive paging from the second cell (e.g., non-best cell), but receive paging (e.g., via a PDSCH transmission) from the first cell 512 (e.g., the serving cell or a best measured cell). For example, the WTRU may receive PEI via the second cell. The WTRU may monitor for paging via the first (e.g., best, camped, serving) cell on a condition that the PEI received via the second (e.g., non-serving) cell indicates the second PEI subgroup. The WTRU may transmit a signal via the first (e.g., best, camped, serving) cell, for example, when the page is received via the first cell (e.g., best, camped, serving). The signal may include an indication that indicates the identity of the first (e.g., best, camped, serving) cell.

At 508, the WTRU may transmit one or more UL signals and/or information. The WTRU may transmit on one or more UL signals associated with the cell availability state (e.g., RACH, PUSCH, and/or PUCCH resources). For example, the WTRU may transmit an UL signal and/or information based on (e.g., upon) receiving paging on a second cell (e.g., a non-best cell). One or more of the following may apply. The WTRU may send a RACH transmission on the paging cell (e.g., and/or the best cell). The WTRU may determine (e.g., select) one or more PRACH resources associated with an NES state if, for example, the RACH is transmitted on the first cell that is in an NES state. For example, the WTRU may transmit a RACH on the second cell (e.g., the paging cell) if the one or more measured channel conditions are above a threshold (e.g., a configured and/or predetermined threshold). For example, based on (e.g., upon) receiving paging on a second cell (e.g., a non-best cell), the WTRU may transmit an NES WUS on a cell, such as the best cell (e.g., if the best cell is sleeping). For example, based on (e.g., upon) receiving paging on a second cell (e.g., a non-best cell), the WTRU may transmit a MAC CE and/or UCI that indicates the best serving cell (e.g., a cell ID in Msg3 payload and/or MsgA). For example, based on (e.g., upon) receiving paging on a second cell (e.g., a non-best cell), the WTRU may transmit an RRC message (e.g., an RRC resume request, RRC re-establishment request, and/or an RRC reconfiguration request).

At 510, for example, the WTRU may receive a message (e.g., Msg4) that may indicate successful completion of the RA. The WTRU may monitor PDSCH on the indicated cell (e.g., at the next NES on duration). Based on (e.g., upon) reception of a response from the first cell, the WTRU may determine (e.g., assume) that the associated availability state has changed, e.g. to the default availability state and/or the ON availability state.

At 514, for example, the WTRU may determine (e.g., assume) the best cell is On based on (e.g., after) reception of paging PDSCH. The WTRU may determine that the first (e.g., camped, serving, best measured) cell is no longer in a NES state, for example, when the page is received via the first (e.g., camped, serving, best measured) cell.

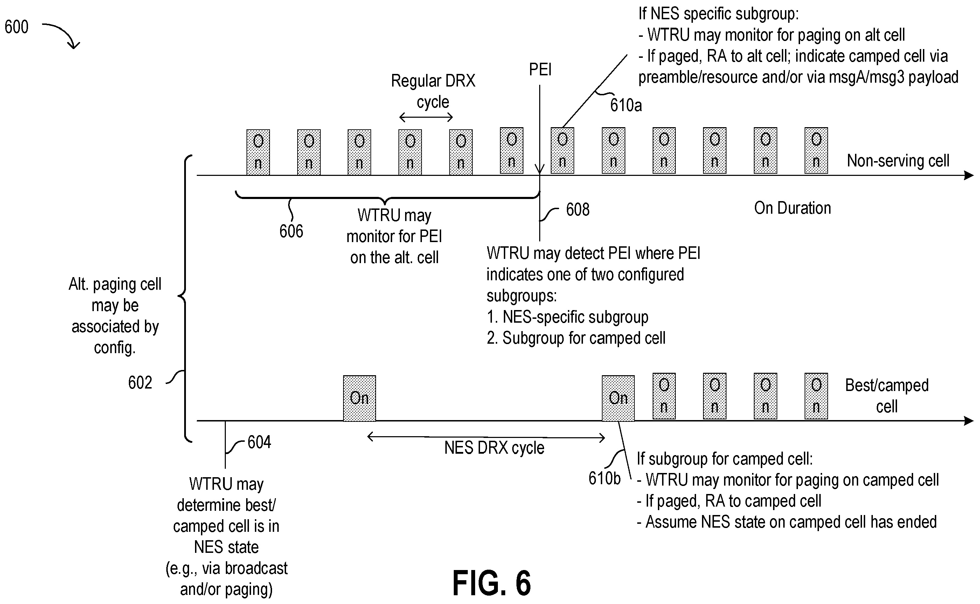

FIG. 6 depicts a second example diagram associated with a sample paging procedure in NES state 600. At 602, alternating paging cell (e.g., second, non-serving cell) may be associated by configuration, as described herein. A WTRU may receive configuration information, as described herein, indicating the first cell (e.g., camped cell, best cell, serving cell) is associated with the second (e.g., non-serving) cell. At 604, the WTRU may determine (e.g., as described herein) the best and/or camped cell is in NES state (e.g., via broadcast, paging, one or more measurements, etc.).

At 606, the WTRU may monitor for PEI on the alternate (e.g., second, non-serving) cell (e.g., as described herein). The second (e.g., alternate, non-serving) cell may be associated with a different DRX cycle than the DRX cycle associated with the first (e.g., serving, camped, best) cell (e.g., as shown in FIGs. 4 and 5).

At 608, the WTRU may detect PEI. The PEI may indicate one or more configured subgroups. For example, the PEI may indicate one of two configured subgroups. The PEI may indicate one or more configured subgroups. The one or more configured subgroups may include a NES-specific subgroup and/or a subgroup for the camped cell.

At 610a, the WTRU may monitor for paging on the alternate cell, for example, if the indicated subgroup (e.g., by the PEI at 608) is a NES specific subgroup. If the WTRU is paged, the WTRU may perform RA to the alternate cell. If the WTRU is paged, the WTRU may indicate the camped cell via preamble/resource and/or via msgA and/or msg3 payload.

At 610b, the WTRU may monitor for paging on the camped cell, for example, if the indicated subgroup (e.g., by the PEI at 608) is a subgroup for the camped cell. If the WTRU is paged, for example, the WTRU may perform RA to the camped cell. If the WTRU is paged, for example, the WTRU may determine (e.g., assume) NES state on the camped cell has ended (e.g., as shown in FIG. 5).

A WTRU may receive and/or acquire SI while the network is in an NES state. One or more the following may apply. For a WTRU that is in the idle and/or inactive state, the WTRU may attempt to acquire SI, for example, at one or more different occasions when the network is NES state, and/or another given availability state. The WTRU may determine a modified timing to acquire SI and/or a subset of one or more SI transmissions (e.g., a subset of SIBs and/or other SI). For example, the timing and/or periodicity of such SI acquisition (e.g., remaining SI) may be acquired from reading minimum SI (e.g., which may be acquired using a default periodicity). Minimum SI may have the same periodicity as one or more other (e.g., legacy) periodicities, but may vary from the periodicity of other SI and/or remaining SIBs. Minimum SI may point to an alternative NES SI periodicity. A flag (e.g., in the minimum SI and/or the resource used to receive a PBCH transmission) may be broadcasted for the WTRU to know which periodicity is used.

The WTRU may be configured with one or more alternative NES SI periodicity(ies). The WTRU may determine the periodicity of the active NES SI periodicity pattern based on one or more of the following: the difference between and/or a comparison of the current SSB and/or RS measurement occasion to one or more (e.g., a number of) past measurements; the cell's overall signal quality (e.g., based on one or more measurements of L3 RSRP and/or the presence signal); and/or the WTRU's mobility status. The WTRU may determine the periodicity of the active NES SI periodicity pattern from the resources and/or the timing of the received minimum SI.

For a WTRU in connected mode, for example, L1 signaling and/or L2 signaling may indicate switching between one or more configured NES SI periodicities. The WTRU may determine (e.g., assume) a different periodicity of SI, other SI, and/or a subset of SIBs, for example, upon reception of such a command.

For a WTRU in idle mode, for example, the WTRU may determine the SI periodicity and/or whether an SI occasion is missing (e.g., transmitted from the gNB or not) based on one or more past measurements. The WTRU may associate the reception of SI with the reception of an SSB. For example, the WTRU may determine (e.g., assume) that one or more SI reception occasions within a period of time from one or more received SSBs (e.g., with a communication metric above a threshold) are valid SI and/or one or more broadcast occasions. The WTRU may determine that broadcast SI is not transmitted if, for example, the current SSB measurement in the measurement occasion differs from one or more (e.g., a number of) past measurements (e.g., and/or a moving average over a number of past measurements) with a difference larger than a predetermined and/or configured value. For example, the number of past measurements may be predetermined and/or configured.

A WTRU may use a window for minimum SI reception and/or other SI reception. During such window, the WTRU may monitor for broadcast of minimum SI and/or other SI. The WTRU may start the window periodically, for example, according to a configured and/or predetermined period. For example, the WTRU may start the window based on (e.g., following) the reception of an SSB, RS, and/or a presence signal (e.g., a presence signal with a signal strength and/or a measured channel condition above a threshold).

A WTRU may request a change of NES SI periodicity In examples, the WTRU may trigger a request to change the NES SI periodicity by transmitting a request for on demand SI. In examples, the WTRU may trigger a request to change the NES SI periodicity by transmitting a wake-up request. In examples, the WTRU may trigger a request to change the NES SI periodicity by transmitting an assistance information request. The WTRU may trigger a request for SI and/or other SI (e.g., by initiating a RA for SI acquisition) if, for example, the serving cell is determined to be in one or more NES states. The WTRU may request other SI after expiration of a NES sleep duration window (e.g., the NES cell validity timer, and/or a period associated with the NES SBB periodicity). For example, WTRU may request other SI after expiration of a NES sleep duration window if the WTRU fails to receive a DL signal and/or presence indication from the gNB within a period. Additionally or alternatively, the WTRU may request other SI after expiration of a NES sleep duration window based on whether (e.g., after if) the WTRU receives broadcast signaling and/or one or more SSB transmissions from the serving cell.

## Claims

1. A wireless transmit/receive unit, WTRU, comprising:
a processor (118), wherein the processor is configured to:
receive configuration information indicating 1) that a second cell is to be used for paging early indication, PEI, monitoring when a first cell is selected as a camped cell and the first cell is in a network energy saving, NES, state, and 2) a first PEI subgroup and a second PEI subgroup;
monitor, based on the first cell being in the NES state, for a PEI via the second cell;
receive the PEI via the second cell;
monitor for paging, wherein the monitoring for paging is: 1) via the second cell on a condition that the PEI indicates the first PEI subgroup, or 2) via the first cell on a condition that the PEI indicates the second PEI subgroup; and
transmit: 1) a signal via the first cell when the paging is received via the first cell, or 2) an indication via the second cell indicating an identity of the first cell when the paging is received via the second cell.

2. The WTRU of claim 1, wherein the processor is further configured to determine that the first cell is no longer in the NES state when the page is received via the first cell.

3. The WTRU of any of claims 1-2, wherein the processor is further configured to receive configuration information indicating the first cell is associated with the second cell.

4. The WTRU of any of claims 1-3, wherein the first PEI subgroup is associated with the second cell, and wherein the second PEI subgroup is associated with the first cell.

5. The WTRU of any of claims 1-4, wherein the first cell is associated with a first discontinuous reception, DRX, cycle and the second cell is associated with a second DRX cycle; and
wherein the processor is further configured to apply the first DRX cycle on condition that the WTRU is connected to the first cell, and apply the second DRX cycle on condition that the WTRU is connected to the second cell.

6. The WTRU of any of claims 1-5, wherein the processor is further configured to determine a paging frame, PF, or a paging occasion, PO, of the first cell or of the second cell based on an NES-specific WTRU identification, ID.

7. The WTRU of any of claims 1-6, wherein the processor is further configured to:
receive broadcast signaling or one or more synchronization signal block, SSBs, transmissions; and
determine that the one or more SSB transmissions or one or more paging occasions are delayed or skipped on the first cell.

8. The WTRU of claim 7, wherein the processor is further configured to determine that a subset of physical downlink control channel, PDCCH, paging occasions of a second DRX cycle are not transmitted based on the determination that the one or more SSB transmissions or the one or more paging occasions are delayed or skipped on the first cell.

9. The WTRU of any of claims 1-8, wherein the processor is further configured to:
determine the second cell based on one or more channel measurements or one or more handover candidate configurations;
determine the NES state of the first cell based on reception of a primary synchronization signal, PSS, transmission or a secondary synchronization signal, SSS, transmission; or
receive broadcast signaling or one or more synchronization signal block, SSB, transmissions to determine the first cell or the second cell based on the received broadcast signaling or based on one or more properties associated with the one or more SSB transmissions.

10. The WTRU of any of claims 1-9, wherein the configuration information comprises an indication that the WTRU is included in a set of one or more WTRUs on condition that the set of one or more WTRUs are in one or more cells that are in an NES state; and
wherein the processor is further configured to monitor or receive one or more group-common indications associated with the set of one or more WTRUs in the NES state.

11. A method performed by a wireless transmit/receive unit, WTRU, the method comprising:
receiving configuration information indicating 1) that a second cell is to be used for paging early indication, PEI, monitoring when a first cell is selected as a camped cell and the first cell is in a network energy saving, NES, state, and 2) a first PEI subgroup and a second PEI subgroup;
monitoring, based on the first cell being in the NES state, for a PEI via the second cell;
receiving the PEI via the second cell;
monitoring for paging, wherein the monitoring for paging is: 1) via the second cell on a condition that the PEI indicates the first PEI subgroup, or 2) via the first cell on a condition that the PEI indicates the second PEI subgroup; and
transmitting a signal via the first cell when the paging is received via the first cell, or an indication via the second cell indicating an identity of the first cell when the paging is received via the second cell.

12. The method of claim 11, wherein the method further comprises determining that the first cell is no longer in the NES state when the page is received via the first cell.

13. The method of any of claims 11-12, wherein the method further comprises receiving configuration information indicating the first cell is associated with the second cell.

14. The method of any of claims 11-13, wherein the first PEI subgroup is associated with the second cell, and wherein the second PEI subgroup is associated with the first cell.

15. The method of any of claims 11-14, wherein the first cell is associated with a first discontinuous reception, DRX, cycle and the second cell is associated with a second DRX cycle; and
wherein the method further comprises applying the first DRX cycle on a condition that the WTRU is connected to the first cell, and applying the second DRX cycle on a condition that the WTRU is connected to the second cell.

## Patentansprüche

1. Drahtlos-Sende- und -Empfangseinheit (Wireless Transmit/Receive Unit, WTRU), umfassend:
einen Prozessor (118), wobei der Prozessor eingerichtet ist zum:
Empfangen von Konfigurationsinformationen, die angeben, 1) dass eine zweite Zelle für eine Paging Early Indication (PEI)-Überwachung verwendet werden soll, wenn eine erste Zelle als Park-Zelle ausgewählt ist und die erste Zelle sich in einem Network Energy Saving (NES)-Zustand befindet, und 2) eine erste PEI-Untergruppe und eine zweite PEI-Untergruppe;
Wachen, auf der Grundlage, dass sich die erste Zelle in dem NES-Zustand befindet, auf eine PEI über die zweite Zelle;
Empfangen der PEI über die zweite Zelle;
Wachen auf ein Paging, wobei das Wachen auf ein Paging stattfindet: 1) über die zweite Zelle unter der Bedingung, dass die PEI die erste PEI-Untergruppe angibt, oder 2) über die erste Zelle unter der Bedingung, dass die PEI die zweite PEI-Untergruppe angibt; und
Senden: 1) eines Signals über die erste Zelle, wenn das Paging über die erste Zelle empfangen wird, oder 2) einer Angabe über die zweite Zelle, die eine Identität der ersten Zelle angibt, wenn das Paging über die zweite Zelle empfangen wird.

2. WTRU nach Anspruch 1, wobei der Prozessor des Weiteren dazu eingerichtet ist zu bestimmen, dass sich die erste Zelle nicht mehr in dem NES-Zustand befindet, wenn das Paging über die erste Zelle empfangen wird.

3. WTRU nach einem der Ansprüche 1 und 2, wobei der Prozessor des Weiteren dazu eingerichtet ist, Konfigurationsinformationen zu empfangen, die angeben, dass die erste Zelle mit der zweiten Zelle verknüpft ist.

4. WTRU nach einem der Ansprüche 1-3, wobei die erste PEI-Untergruppe mit der zweiten Zelle verknüpft ist, und wobei die zweite PEI-Untergruppe mit der ersten Zelle verknüpft ist.

5. WTRU nach einem der Ansprüche 1-4, wobei die erste Zelle mit einem ersten diskontinuierlichen Empfangszyklus (Discontinuous Reception, DRX-Zyklus) verknüpft ist und die zweite Zelle mit einem zweiten DRX-Zyklus verknüpft ist; und
wobei der Prozessor des Weiteren dazu eingerichtet ist, den ersten DRX-Zyklus unter der Bedingung anzuwenden, dass die WTRU mit der ersten Zelle verbunden ist, und den zweiten DRX-Zyklus unter der Bedingung anzuwenden, dass die WTRU mit der zweiten Zelle verbunden ist.

6. WTRU nach einem der Ansprüche 1-5, wobei der Prozessor des Weiteren dazu eingerichtet ist, einen Paging-Frame (PF) oder eine Paging-Gelegenheit (Paging Occasion, PO) der ersten Zelle oder der zweiten Zelle auf der Grundlage einer NES-spezifischen WTRU-Kennung (Identification, ID) zu bestimmen.

7. WTRU nach einem der Ansprüche 1-6, wobei der Prozessor des Weiteren eingerichtet ist zum:
Empfangen einer Rundsendesignalisierung oder von Übertragungen eines oder mehrerer Synchronisationssignalblöcke (SSBs); und
Bestimmen, dass die eine oder die mehreren SSB-Übertragungen oder die eine oder die mehreren Paging-Gelegenheiten in der ersten Zelle verzögert oder übersprungen werden.

8. WTRU nach Anspruch 7, wobei der Prozessor des Weiteren dazu eingerichtet ist, auf der Grundlage der Bestimmung, dass die eine oder die mehreren SSB-Übertragungen oder die eine oder die mehreren Paging-Ereignisse in der ersten Zelle verzögert oder übersprungen werden, zu bestimmen, dass eine Teilmenge von Physical Downlink Control Channel (PDCCH)-Paging-Gelegenheiten eines zweiten DRX-Zyklus nicht gesendet wird.

9. WTRU nach einem der Ansprüche 1-8, wobei der Prozessor des Weiteren eingerichtet ist zum:
Bestimmen der zweiten Zelle auf der Grundlage einer oder mehrerer Kanalmessungen oder einer oder mehrerer Übergabekandidatenkonfigurationen;
Bestimmen des NES-Zustands der ersten Zelle auf der Grundlage des Empfangs einer Übertragung eines primären Synchronisationssignals (PSS) oder einer Übertragung eines sekundären Synchronisationssignals (SSS); oder
Empfangen einer Rundsendesignalisierung oder von Übertragungen eines oder mehrerer Synchronisationssignalblöcke (SSBs), um auf der Grundlage der empfangenen Rundsendesignalisierung oder auf der Grundlage einer oder mehrerer Eigenschaften, die mit der einen oder den mehreren SSB-Übertragungen verknüpft sind, die erste Zelle oder die zweite Zelle zu bestimmen.

10. WTRU nach einem der Ansprüche 1-9, wobei die Konfigurationsinformationen eine Angabe umfassen, dass die WTRU in einem Satz aus einer oder mehreren WTRUs enthalten ist, unter der Bedingung, dass sich der Satz aus einer oder mehreren WTRUs in einer oder mehreren Zellen befindet, die sich in einem NES-Zustand befinden; und
wobei der Prozessor des Weiteren dazu eingerichtet ist, eine oder mehrere gruppengemeinsame Angaben zu überwachen oder zu empfangen, die mit dem Satz aus einer oder mehreren WTRUs in dem NES-Zustand verknüpft sind.

11. Verfahren, das durch eine Drahtlos-Sende- und -Empfangseinheit (Wireless Transmit/Receive Unit, WTRU) durchgeführt wird, wobei das Verfahren umfasst:
Empfangen von Konfigurationsinformationen, die angeben, 1) dass eine zweite Zelle für eine Paging Early Indication (PEI)-Überwachung verwendet werden soll, wenn eine erste Zelle als Park-Zelle ausgewählt ist und die erste Zelle sich in einem Network Energy Saving (NES)-Zustand befindet, und 2) eine erste PEI-Untergruppe und eine zweite PEI-Untergruppe;
Wachen, auf der Grundlage, dass sich die erste Zelle in dem NES-Zustand befindet, auf eine PEI über die zweite Zelle;
Empfangen der PEI über die zweite Zelle;
Wachen auf ein Paging, wobei das Wachen auf ein Paging stattfindet: 1) über die zweite Zelle unter der Bedingung, dass die PEI die erste PEI-Untergruppe angibt, oder 2) über die erste Zelle unter der Bedingung, dass die PEI die zweite PEI-Untergruppe angibt; und
Senden eines Signals über die erste Zelle, wenn das Paging über die erste Zelle empfangen wird, oder einer Angabe über die zweite Zelle, die eine Identität der ersten Zelle angibt, wenn das Paging über die zweite Zelle empfangen wird.

12. Verfahren nach Anspruch 11, wobei das Verfahren des Weiteren das Bestimmen umfasst, dass sich die erste Zelle nicht mehr in dem NES-Zustand befindet, wenn das Paging über die erste Zelle empfangen wird.

13. Verfahren nach einem der Ansprüche 11 und 12, wobei das Verfahren des Weiteren das Empfangen von Konfigurationsinformationen umfasst, die angeben, dass die erste Zelle mit der zweiten Zelle verknüpft ist.

14. Verfahren nach einem der Ansprüche 11-13, wobei die erste PEI-Untergruppe mit der zweiten Zelle verknüpft ist, und wobei die zweite PEI-Untergruppe mit der ersten Zelle verknüpft ist.

15. Verfahren nach einem der Ansprüche 11-14, wobei die erste Zelle mit einem ersten diskontinuierlichen Empfangszyklus (Discontinuous Reception, DRX-Zyklus) verknüpft ist und die zweite Zelle mit einem zweiten DRX-Zyklus verknüpft ist; und
wobei das Verfahren des Weiteren umfasst, den ersten DRX-Zyklus unter der Bedingung anzuwenden, dass die WTRU mit der ersten Zelle verbunden ist, und den zweiten DRX-Zyklus unter der Bedingung anzuwenden, dass die WTRU mit der zweiten Zelle verbunden ist.

## Revendications

1. Unité émettrice-réceptrice sans fil, WTRU, comprenant :
un processeur (118), dans laquelle le processeur est configuré pour :
recevoir des informations de configuration indiquant 1) qu'une deuxième cellule doit être utilisée pour une surveillance d'indication précoce de radiomessagerie, PEl, lorsqu'une première cellule est sélectionnée en tant que cellule de mise en attente et la première cellule se trouve dans un état d'économie d'énergie de réseau, NES, et 2) un premier sous-groupe de PEI et un deuxième sous-groupe de PEI ;
surveiller, sur la base du fait que la première cellule se trouve dans l'état NES, une PEI via la deuxième cellule ;
recevoir la PEI via la deuxième cellule ;
surveiller une radiomessagerie, dans laquelle la surveillance de radiomessagerie est : 1) via la deuxième cellule à condition que la PEI indique le premier sous-groupe de PEI, ou 2) via la première cellule à condition que la PEI indique le deuxième sous-groupe de PEI ; et
transmettre : 1) un signal via la première cellule lorsque la radiomessagerie est reçue via la première cellule, ou 2) une indication via la deuxième cellule indiquant une identité de la première cellule lorsque la radiomessagerie est reçue via la deuxième cellule.

2. WTRU selon la revendication 1, dans laquelle le processeur est en outre configuré pour déterminer que la première cellule ne se trouve plus dans l'état NES lorsque la radiomessagerie est reçue via la première cellule.

3. WTRU selon l'une quelconque des revendications 1 et 2, dans laquelle le processeur est en outre configuré pour recevoir des informations de configuration indiquant que la première cellule est associée à la deuxième cellule.

4. WTRU selon l'une quelconque des revendications 1 à 3, dans laquelle le premier sous-groupe de PEI est associé à la deuxième cellule, et dans laquelle le deuxième sous-groupe de PEI est associé à la première cellule.

5. WTRU selon l'une quelconque des revendications 1 à 4, dans laquelle la première cellule est associée à un premier cycle de réception discontinue, DRX, et la deuxième cellule est associée à un deuxième cycle DRX ; et
dans laquelle le processeur est en outre configuré pour appliquer le premier cycle DRX à condition que la WTRU soit connectée à la première cellule, et appliquer le deuxième cycle DRX à condition que la WTRU soit connectée à la deuxième cellule.

6. WTRU selon l'une quelconque des revendications 1 à 5, dans laquelle le processeur est en outre configuré pour déterminer une trame de radiomessagerie, PF, ou une occasion de radiomessagerie, PO, de la première cellule ou de la deuxième cellule sur la base d'une identification, ID, de WTRU spécifique à NES.

7. WTRU selon l'une quelconque des revendications 1 à 6, dans laquelle le processeur est en outre configuré pour :
recevoir une signalisation de diffusion ou une ou plusieurs transmissions de bloc de signal de synchronisation, SSB ; et
déterminer que les une ou plusieurs transmissions de SSB ou une ou plusieurs occasions de radiomessagerie sont retardées ou sautées sur la première cellule.

8. WTRU selon la revendication 7, dans laquelle le processeur est en outre configuré pour déterminer qu'un sous-ensemble d'occasions de radiomessagerie de canal de commande de liaison descendante physique, PDCCH, d'un deuxième cycle DRX ne sont pas transmises sur la base de la détermination que les une ou plusieurs transmissions de SSB ou les une ou plusieurs occasions de radiomessagerie sont retardées ou sautées sur la première cellule.

9. WTRU selon l'une quelconque des revendications 1 à 8, dans laquelle le processeur est en outre configuré pour :
déterminer la deuxième cellule sur la base d'une ou plusieurs mesures de canal ou d'une ou plusieurs configurations de candidat de transfert intercellulaire ;
déterminer l'état NES de la première cellule sur la base d'une réception d'une transmission de signal de synchronisation primaire, PSS, ou d'une transmission de signal de synchronisation secondaire, SSS ; ou
recevoir une signalisation de diffusion ou une ou plusieurs transmissions de bloc de signal de synchronisation, SSB, pour déterminer la première cellule ou la deuxième cellule sur la base de la signalisation de diffusion reçue ou sur la base d'une ou plusieurs propriétés associées aux une ou plusieurs transmissions de SSB.

10. WTRU selon l'une quelconque des revendications 1 à 9, dans laquelle les informations de configuration comprennent une indication que la WTRU est incluse dans un ensemble d'une ou plusieurs WTRU à condition que l'ensemble d'une ou plusieurs WTRU se trouvent dans une ou plusieurs cellules qui sont dans un état NES ; et
dans laquelle le processeur est en outre configuré pour surveiller ou recevoir une ou plusieurs indications communes au groupe associées à l'ensemble d'une ou plusieurs WTRU dans l'état NES.

11. Procédé réalisé par une unité émettrice-réceptrice sans fil, WTRU, le procédé comprenant :
la réception d'informations de configuration indiquant 1) qu'une deuxième cellule doit être utilisée pour une surveillance d'indication précoce de radiomessagerie, PEl, lorsqu'une première cellule est sélectionnée en tant que cellule de mise en attente et la première cellule se trouve dans un état d'économie d'énergie de réseau, NES, et 2) un premier sous-groupe de PEI et un deuxième sous-groupe de PEI ;
la surveillance, sur la base du fait que la première cellule se trouve dans l'état NES, d'une PEI via la deuxième cellule ;
la réception de la PEI via la deuxième cellule ;
la surveillance d'une radiomessagerie, dans lequel la surveillance de radiomessagerie est : 1) via la deuxième cellule à condition que la PEI indique le premier sous-groupe de PEI, ou 2) via la première cellule à condition que la PEI indique le deuxième sous-groupe de PEI ; et
la transmission d'un signal via la première cellule lorsque la radiomessagerie est reçue via la première cellule, ou d'une indication via la deuxième cellule indiquant une identité de la première cellule lorsque la radiomessagerie est reçue via la deuxième cellule.

12. Procédé selon la revendication 11, dans lequel le procédé comprend en outre la détermination que la première cellule ne se trouve plus dans l'état NES lorsque la radiomessagerie est reçue via la première cellule.

13. Procédé selon l'une quelconque des revendications 11 et 12, dans lequel le procédé comprend en outre la réception d'informations de configuration indiquant que la première cellule est associée à la deuxième cellule.

14. Procédé selon l'une quelconque des revendications 11 à 13, dans lequel le premier sous-groupe de PEI est associé à la deuxième cellule, et dans lequel le deuxième sous-groupe de PEI est associé à la première cellule.

15. Procédé selon l'une quelconque des revendications 11 à 14, dans lequel la première cellule est associée à un premier cycle de réception discontinue, DRX, et la deuxième cellule est associée à un deuxième cycle DRX ; et
dans lequel le procédé comprend en outre l'application du premier cycle DRX à condition que la WTRU soit connectée à la première cellule, et l'application du deuxième cycle DRX à condition que la WTRU soit connectée à la deuxième cellule.
